# EUROPÄISCHE PATENTSCHRIFT

(11) **EP 2 629 890 B1**
(45) Veröffentlichungstag und Bekanntmachung des Hinweises auf die Patenterteilung: **24.12.2014**
(21) Anmeldenummer: 11770362.9
(22) Anmeldetag: 10.10.2011
(51) Int. Cl.: B01L 3/00

(54) **PROBENTRÄGEREINRICHTUNG MIT PROBENDATENVERSCHLÜSSELUNG UND VERFAHREN ZU DEREN ANWENDUNG**
SAMPLE HOLDER WITH SAMPLE DATA ENCRYPTION AND PROCESS OF USING IT
PORTE-ÉCHANTILLON AVEC CRYPTAGE DES INFORMATIONS D'ECHANTILLON ET SON UTILISATION

(30) Priorität: 18.10.2010 DE 102010048784
(43) Veröffentlichungstag der Anmeldung: 28.08.2013
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 60596 Frankfurt am Main (DE); WICK, Haiko, 66793 Saarwellingen-Reisbach (DE); IHMIG, Frank, 66280 Sulzbach (DE)
(74) Vertreter: Hertz, Oliver
(86) Internationale Anmeldenummer: PCT/EP2011/005060
(87) Internationale Veröffentlichungsnummer: WO 2012/052122

(56) Entgegenhaltungen:
- US-A1- 2002 199 094
- US-A1- 2004 241 044
- US-A1- 2005 009 122
- US-A1- 2007 075 141

## Beschreibung

Die Erfindung betrifft eine Probenträgereinrichtung, insbesondere für biologische Proben, mit einer Probenaufnahmeeinrichtung, die zur Aufnahme mindestens einer Probe eingerichtet ist, und mit einer Datenspeichereinrichtung, die zur Speicherung von Probendaten eingerichtet ist, welche sich auf die mindestens eine Probe beziehen. Des Weiteren betrifft die Erfindung eine Datenverarbeitungseinrichtung, die für einen Datenaustausch mit der Probenträgereinrichtung eingerichtet ist. Des Weiteren betrifft die Erfindung ein Verfahren zur Verarbeitung von Probendaten, insbesondere von biologischen Proben, unter Verwendung der Probenträgereinrichtung. Anwendungen der Erfindung sind bei der Handhabung von Proben, insbesondere von biologischen Proben, wie z. B. bei der Gewinnung, Bearbeitung, Lagerung und/oder Konservierung biologischer Proben, gegeben. Die Erfindung ermöglicht insbesondere die reversible oder irreversible Anonymisierung und/oder Authentifizierung von Proben.

Mit der Entwicklung der Biowissenschaften, wie z. B. der Biochemie, Biomedizin oder Biotechnologie, und der medizinischen Diagnostik besteht ein wachsender Bedarf an biologischen Proben (biologische Organismen oder Teile von diesen, wie z. B. Gewebe, Gewebeteile, Körperflüssigkeiten, Zellen oder Zellbestandteile) und zugehörigen Probendaten, die z. B. bei der Gewinnung, Bearbeitung, Lagerung oder Konservierung der Proben erzeugt oder verarbeitet werden. Anwendungsszenarien für biologische Proben unterscheiden sich in Bezug auf die Anzahl der Proben, die Nutzungsdauer, die Lagerungsdauer und/oder die Komplexität der Probendaten, wobei wichtige Gesichtspunkte in der Sicherheit und Reproduzierbarkeit der Handhabung der Proben, wie z. B. die Aufrechterhaltung bestimmter Lagerungsbedingungen, der Identifizierung von Proben und der Rückverfolgbarkeit von Proben hinsichtlich der Probenquelle oder der Anwendungsbedingungen bestehen.

Es ist allgemein bekannt, Probendaten z. B. für Identifizierungs- oder Dokumentationszwecke in einem Datenspeicher zu speichern, der unmittelbar physikalisch mit der Probe verbunden ist (z. B. US 6 931 864). Probenträgereinrichtungen, welche eine Probenaufnahmeeinrichtung und eine Datenspeichereinrichtung physikalisch verbinden, erlauben eine vollständige und verwechslungssichere Beschreibung der Probe unabhängig von ihrem aktuellen Standort oder einer Datenbankverbindung. Die Verbindung der Probendaten mit der Probe kann jedoch auch nachteilig sein, wenn Probendaten oder Teile von diesen nur eingeschränkt verfügbar sein sollen.

So können Probendaten in der Humanmedizin personenbezogene Daten über einen Spender oder einen Patienten enthalten, wobei diese Daten für die Handhabung oder Bewertung der Proben von wesentlicher Bedeutung, jedoch aus ethischen oder rechtlichen Gründen streng vertraulich zu behandeln sein können. Beispielsweise müssen Proben bei einer Weitergabe an Forschungseinrichtungen oder Laboratorien einer zuverlässigen Anonymisierung unterzogen werden, um die Persönlichkeitsrechte des Spenders zu wahren. Bei Laboruntersuchungen oder klinischen Studien kann jedoch ein Interesse bestehen, Probendaten, wie z. B. Messergebnisse, nachträglich wieder mit personenbezogenen Daten zu verknüpfen, beispielsweise wenn nach einer längeren Lagerungszeit neue medizinische Erkenntnisse eine verbesserte Therapie der betroffenen Person ermöglichen. Es besteht daher ein Interesse, Proben einer irreversiblen Anonymisierung oder einer reversiblen Anonymisierung (oder: Pseudonymisierung) zu unterziehen.

Aus der Praxis ist bekannt, zur Anonymisierung von Probendaten nicht die kompletten personenbezogenen Daten, sondern nur eine Identifizierungsinformation an der Probe zu speichern. Für eine reversible Anonymisierung kann die Identifizierungsinformation mit zugehörigen personenbezogenen Daten von der Probe getrennt manuell oder elektronisch gespeichert sein. Weitere Daten, die nach der Probengewinnung anfallen, können ebenfalls anonymisiert und von der Probe getrennt gespeichert werden. Gemäß einem weiteren, aus der Praxis bekannten Ansatz kann eine Anonymisierung durch ein Löschen von personenbezogenen Daten oder eine Software-basierte Unterdrückung personenbezogener Daten beim Lesen von Probendaten erzielt werden.

Die herkömmlichen Anonymisierungsverfahren haben eine Reihe von Nachteilen, die sich insbesondere bei der dauerhaften Lagerung von Proben, z. B. im kryokonservierten Zustand, ausprägen. So bedeutet die herkömmliche Verwendung der Identifizierungsinformation eine Trennung von Informationen von der Probe, so dass eine vollständige und verwechslungssichere Beschreibung und Dokumentation der Probe nicht mehr gewährleistet ist. Die Zuordnung der Identifizierungsinformation zu den gesondert gespeicherten Daten (sog. "Mapping"), die ggf. durch eine manuelle Datenverarbeitung realisiert werden muss, stellt einen hohen Arbeitsaufwand und ein Fehlerrisiko dar. Die zuverlässige Wiederherstellung von Informationen bei der reversiblen Anonymisierung kann durch Mapping bei der Langzeitlagerung, z. B. über Jahre, nicht sicher gewährleistet werden. Schließlich erfordert das zuverlässige, physikalische Löschen elektronisch gespeicherter Informationen einen hohen Aufwand, was sich insbesondere bei der Handhabung einer Vielzahl von Proben nachteilig auswirkt.

Aus DE 102 06 396 A1 ist bekannt, zusätzlich zu Probendaten eines Patienten auch biometrische Schlüsseldaten zu speichern, die für den Patienten spezifisch sind. Die biometrischen Schlüsseldaten werden aus der Probe gewonnen und gemeinsam mit den Probendaten in einem Datensatz gespeichert, wobei jedoch eine Anonymisierung der Probendaten nicht möglich ist. Weitere Techniken zur Verarbeitung biometrischer Daten sind aus US 2004/0162987 A1 und WO 2005/064325 A2 bekannt, wobei ebenfalls Nachteile hinsichtlich der Möglichkeiten für eine zuverlässige Anonymisierung oder Pseudonymisierung von Daten bestehen.

Die genannten Nachteile treten nicht nur in der Humanmedizin, sondern auch bei anderen Anwendungen biologischer oder nichtbiologischer Proben auf, wenn z. B. Proben für Untersuchungszwecke zwischen verschiedenen Laboratorien ausgetauscht und zugehörige Probendaten geheimgehalten werden sollen.

Die Aufgabe der Erfindung ist es, eine verbesserte Probenträgereinrichtung, die für eine Probenaufnahme und eine Datenspeicherung ausgelegt ist, bereitzustellen, mit der Nachteile herkömmlicher Probenträgereinrichtungen vermieden werden. Die Probenträgereinrichtung soll insbesondere für eine irreversible oder reversible Anonymisierung mit einem verminderten Aufwand, einer erhöhten Zuverlässigkeit und/oder einer hohen Langzeitstabilität geeignet sein. Die Aufgabe der Erfindung ist es des Weiteren, eine Datenverarbeitungseinrichtung bereitzustellen, die für eine Kopplung mit der verbesserten Probenträgereinrichtung konfiguriert ist. Die Aufgabe der Erfindung ist es des Weiteren, ein verbessertes Verfahren zur Verarbeitung von Probendaten bereitzustellen, mit dem Nachteile herkömmlicher Techniken überwunden werden.

Die Aufgaben der Erfindung werden durch eine Probenträgereinrichtung, eine Datenverarbeitungseinrichtung bzw. ein Verfahren mit den Merkmalen der unabhängigen Ansprüche gelöst. Vorteilhafte Ausführungsformen der Erfindung ergeben sich aus den abhängigen Ansprüchen.

Gemäß einem ersten Gesichtspunkt der Erfindung wird die genannte Aufgabe durch eine Probenträgereinrichtung gelöst, die mit einer Probenaufnahmeeinrichtung und einer Datenspeichereinrichtung ausgestattet ist. Die Probenaufnahmeeinrichtung ist für die Aufnahme mindestens einer Probe, insbesondere mindestens einer biologischen Probe konfiguriert. Sie umfasst mindestens eine Probenaufnahme, z. B. in Form eines verschließbaren Gefäßes oder eines Trägersubstrats. Die Datenspeichereinrichtung ist zur Speicherung von Probendaten eingerichtet, die sich auf die mindestens eine Probe beziehen. Die Datenspeichereinrichtung umfasst mindestens einen Datenspeicher, der für die Ablage der Probendaten eingerichtet ist.

Gemäß der Erfindung ist die Probenträgereinrichtung des Weiteren mit einer Schlüsselspeichereinrichtung ausgestattet, die mindestens einen Schlüsselspeicher aufweist. Die Schlüsselspeichereinrichtung und die Datenspeichereinrichtung sind zwei an der Probenträgereinrichtung vorgesehene Bauteile. Die Schlüsselspeichereinrichtung, die als separates Bauteil zusätzlich zur Datenspeichereinrichtung bereitgestellt wird, ist zur Speicherung von Schlüsseldaten in dem mindestens einen Schlüsselspeicher eingerichtet. Die Schlüsseldaten umfassen mindestens einen kryptologischen Schlüssel, der zur kryptologischen Verschlüsselung von Daten, insbesondere zur kryptologischen Verschlüsselung der Probendaten oder eines Teils von diesen verwendbar ist.

Die kryptologischen Verschlüsselung kann eine unmittelbare Verschlüsselung von Probendaten an sich und/oder eine Verschlüsselung von Zusatzdaten umfassen. Bei der Verschlüsselung von Zusatzdaten sind Varianten der Erfindung vorgesehen, bei denen nicht der Schlüssel direkt in der Schlüsselspeichereinrichtung hinterlegt ist, sondern Informationen zur Erzeugung bzw. Nutzung von anderweitig abgelegten Schlüsseln. Beispielsweise kann die Schlüsselspeichereinrichtung zur Speicherung von Informationen verwendet werden, die zur Erzeugung eines temporären Schlüssels (oder sog. Session-Key) erforderlich sind, mit dem sich verschlüsselte Daten entschlüsseln lassen. Des Weiteren kann die Schlüsselspeichereinrichtung zur Speicherung von Informationen verwendet werden, die ergänzt durch Informationen auf Empfängerseite (z. B. Schlüssel des Empfängers) zur Erzeugung eines solchen Session Keys oder zur direkten Entschlüsselung genutzt werden können. Die Schlüsselspeichereinrichtung kann auch zur Speicherung von einer geheimen, probenspezifischen Nummer (PIN) oder eines Passwortes zur Ver-/Entschlüsselung mit Hilfe eines auf in der Datenspeichereinrichtung abgelegten Schlüssels verwendet werden.

Erfindungsgemäß können die Probendaten, die in der Datenspeichereinrichtung gespeichert werden, vollständig verschlüsselt werden. Alternativ ist es möglich, lediglich Teile der Probendaten zu verschlüsseln. Beispielsweise kann die Verschlüsselung bei Anwendungen in der Humanmedizin auf personenbezogene Daten (Daten, die den Probenspender und/oder Merkmale von diesem charakterisieren) beschränkt werden. Bei anderen Anwendungen kann die Verschlüsselung auf geheime Daten beschränkt werden, die sich z. B. auf die Zusammensetzung der Probe oder deren Herstellung beziehen. Wenn im Folgenden die Verschlüsselung der Probendaten allgemein genannt wird, kann sich dies auf beide Varianten der Verschlüsselung der kompletten Probendaten oder eines Teils von diesen beziehen.

Vorteilhafterweise wird mit der erfindungsgemäßen Probenträgereinrichtung eine Kombination aus mindestens einer Probe, zugehörigen Probendaten und Schlüsseldaten geschaffen, wobei die Probendaten verschlüsselt in der Datenspeichereinrichtung gespeichert und unter Verwendung der Schlüsseldaten entschlüsselt und gelesen werden können. Mit der Speicherung von verschlüsselten Probendaten kann ein unautorisierter Zugriff auf die Probendaten unterbunden werden. Die Verschlüsselung ermöglicht eine Anonymisierung der mindestens einen Probe, ohne dass Probendaten gelöscht oder von der Probenträgereinrichtung getrennt gespeichert werden müssen. Vorteilhafterweise werden des Weiteren die Anonymisierung und optional eine Re-Identifizierung von Proben mit hoher Geschwindigkeit und besonders einfach ermöglicht. Die erfindungsgemäße Probenträgereinrichtung ist für die Anwendung mit etablierten Datenstrukturen und mit dauerhaften, z. B. über Jahre andauernden, Verfahren zur Handhabung und/oder Lagerung der Proben, insbesondere bei der Kryokonservierung der Proben geeignet.

Gemäß einem zweiten Gesichtspunkt der Erfindung wird eine Datenverarbeitungseinrichtung bereitgestellt, die zur Kopplung mit der Probenträgereinrichtung gemäß dem ersten Gesichtspunkt der Erfindung konfiguriert ist. Die Datenverarbeitungseinrichtung umfasst eine Schreib-Lese-Einrichtung, mit der Schlüsseldaten von der Schlüsselspeichereinrichtung der Probenträgereinrichtung lesbar sind, und einen kryptologischen Prozessor, der mit der Schreib-Lese-Einrichtung verbunden und zur Entschlüsselung und/oder Verschlüsselung von Probendaten unter Anwendung der Schlüsseldaten eingerichtet ist. Die Datenverarbeitungseinrichtung weist eine Datenverbindung, z. B. über eine drahtlose oder drahtgebundene Schnittstelle, auf, über die verschlüsselte Probendaten in die oder aus der Datenspeichereinrichtung der mit der Datenverarbeitungseinrichtung gekoppelten Probenträgereinrichtung gespeichert oder gelesen werden können.

Vorteilhafterweise wird mit der Datenverarbeitungseinrichtung ein kompakt strukturierbares, für eine schnelle Ablage und ein schnelles Lesen verschlüsselter Daten geeignetes Werkzeug geschaffen, das insbesondere für eine automatisierte Handhabung von Probenträgereinrichtungen geeignet ist.

Gemäß einem dritten Gesichtspunkt der Erfindung wird ein Verfahren zur Verarbeitung von Probendaten bereitgestellt, bei dem die Probenträgereinrichtung gemäß dem oben genannten ersten Gesichtspunkt der Erfindung verwendet wird. Erfindungsgemäß werden die Probendaten oder ein Teil von diesen unter Verwendung der Schlüsseldaten, insbesondere des mindestens einen kryptologischen Schlüssels, der in den Schlüsseldaten enthalten und in der Schlüsselspeichereinrichtung gespeichert ist, verschlüsselt, und die verschlüsselten Probendaten werden in der Datenspeichereinrichtung der Probenträgereinrichtung gespeichert. Vorteilhafterweise kann das erfindungsgemäße Verfahren mit herkömmlichen Verfahren der primären Erzeugung von Probendaten und deren weiterer Verarbeitung, z. B. Fortschreiben, Lesen, Aktualisieren und Überwachen, kombiniert werden.

Gemäß einem vierten Gesichtspunkt der Erfindung wird ein Verfahren zur Authentifizierung einer Arbeitsstation, z. B. innerhalb eines Bereiches zur Probenbearbeitung, gegenüber einer Probenträgereinrichtung, z. B. durch Verwendung eines Arbeitsstation-Schlüssels für bestimmte Datenbereiche, bereitgestellt, wobei die Probenträgereinrichtung gemäß dem oben genannten ersten Gesichtspunkt der Erfindung verwendet wird. An der Arbeitsstation kann als Lese-Gerät insbesondere die Datenverarbeitungseinrichtung gemäß dem zweiten Gesichtspunkt der Erfindung verwendet werden.

Des Weiteren kann eine Authentifizierung einer Probenträgereinrichtung vorgesehen sein, wobei ein Signatur-Schlüssel ("digitale Signatur") gespeichert wird. Es kann ein asymmetrisches Verfahren realisiert werden, wobei eine Probenquelle in einem Bereich der Probenerzeugung die Probe mit einem nur der Probenquelle bekannten privaten Schlüssel signiert und die Signatur mit einem öffentlichen Schlüssel überprüft werden kann.

Vorteilhafterweise können die verschlüsselten Probendaten erfindungsgemäß vor einem unautorisierten Zugriff geschützt werden, obwohl die Schlüsselspeichereinrichtung mit den Schlüsseldaten zumindest bei der Aufnahme der Probe in der Probenträgereinrichtung und der primären Erzeugung von Probendaten und optional auch während der weiteren Verwendung der Probenträgereinrichtung mit dieser fest verbunden ist. Beispielsweise kann das kryptologische System, auf dem die Verschlüsselung und Entschlüsselung der Probendaten basiert, mit einem asymmetrischen Schlüssel arbeiten, von dem ein erster (öffentlicher) Teil in der Schlüsselspeichereinrichtung gespeichert ist und ein zweiter (nicht-öffentlicher) Teil von Anwendern der Probenträgereinrichtung geheim gehalten wird. Alternativ kann das kryptologische System mit einem symmetrischen Schlüssel arbeiten, wobei jedoch der Zugriff auf den kryptologischen Schlüssel in der Schlüsselspeichereinrichtung durch ein Passwort geschützt werden kann.

Alternativ ist gemäß einer bevorzugten und besonders vorteilhaften Ausführungsform der Erfindung vorgesehen, dass mindestens ein Schlüsselspeicher der Schlüsselspeichereinrichtung von der Probenträgereinrichtung trennbar ist. Bei dieser Ausführungsform der Erfindung ist eine physikalische Trennung des mindestens einen Schlüsselspeichers von der Probenträgereinrichtung, insbesondere von der Probenaufnahmeeinrichtung, der Datenspeichereinrichtung und/oder einem Gehäuse von diesen, vorgesehen, wobei eine mechanische Verbindung zwischen dem mindestens einen Schlüsselspeicher und der Probenträgereinrichtung unterbrochen wird.

Die Trennung des mindestens einen Schlüsselspeichers von der Probenträgereinrichtung kann irreversibel sein. Bei dieser Variante ist vorzugsweise eine Sollbruchstelle vorgesehen, an der der mindestens eine Schlüsselspeicher von der Probenträgereinrichtung getrennt werden kann. Vorteilhafterweise ermöglicht die irreversible Trennung eine schnelle und zuverlässige irreversible Anonymisierung ("one-way-Anonymisierung"), indem der mindestens eine Schlüsselspeicher von der Probenträgereinrichtung getrennt, z. B. abgebrochen oder abgeschnitten, und dabei ggf. irreversibel beschädigt wird. Mit dieser Variante kann jedoch auch eine reversible Anonymisierung realisiert werden, wenn nach der Abtrennung des mindestens einen Schlüsselspeichers weitere Schlüsseldaten, wie z. B. mindestens ein Identifizierungs-Schlüssel und/oder mindestens ein Master-Schlüssel in der Schlüsselspeichereinrichtung gespeichert bleiben. Die weiteren Schlüsseldaten können für eine Rekonstruktion des mindestens einen kryptologischen Schlüssels verwendet werden, wie dies unten beschrieben ist.

Alternativ kann eine reversible Trennbarkeit vorgesehen sein. Bei dieser Variante ist der mindestens eine Schlüsselspeicher an einer Speicherhalterung der Probenträgereinrichtung lösbar befestigt, wobei die Speicherhalterung z. B. für eine Steck-, Rast- oder Schraubverbindung des mindestens einen Schlüsselspeichers mit der Probenträgereinrichtung konfiguriert ist.

Vorteilhafterweise bestehen in Bezug auf den Typ der Speicherung von Schlüsseldaten in der Schlüsselspeichereinrichtung keine Beschränkungen. Gemäß bevorzugten Varianten der Erfindung kann der mindestens eine Schlüsselspeicher für eine elektronische, optische und/oder magnetische Speicherung der Schlüsseldaten eingerichtet sein. Des Weiteren kann der mindestens eine Schlüsselspeicher für eine einmalige Speicherung der Schlüsseldaten (nur Lese-Speicher) oder für eine mehrfache Speicherung und/oder Änderung von Schlüsseldaten (Schreib-Lese-Speicher) eingerichtet sein.

Wenn gemäß einer weiteren bevorzugten Ausführungsform der Erfindung die Schlüsselspeichereinrichtung für eine drahtlose Datenverbindung mit einem Lese-Gerät oder einem Schreib-Lese-Gerät, insbesondere mit der Datenverarbeitungseinrichtung gemäß dem oben genannten zweiten Gesichtspunkt der Erfindung konfiguriert ist, können sich Vorteile für eine einfache Handhabung der Probenträgereinrichtung beim Speichern oder Lesen von Probendaten ergeben.

Gemäß einer besonders bevorzugten Ausführungsform der Erfindung umfasst die Schlüsselspeichereinrichtung mindestens einen Transponder (RFID-Schaltkreis). Der Transponder umfasst einen Transponderspeicher, mit dem der Schlüsselspeicher bereitgestellt wird, und eine Resonanzstruktur, mit der die drahtlose Datenverbindung mit dem Schreib-Lese-Gerät oder dem Lese-Gerät realisierbar ist. In Abhängigkeit von der Anwendung der Erfindung und der Gestaltung der Probenträgereinrichtung kann die Schlüsselspeichereinrichtung mehrere Transponder umfassen, die jeweils einen Schlüsselspeicher bereitstellen und einzeln auslesbar sind. Zur Realisierung der oben genannten Trennbarkeit des mindestens einen Schlüsselspeichers von der Probenträgereinrichtung kann der mindestens eine Transponder über eine Sollbruchstelle oder eine Speicherhalterung mit der Probenträgereinrichtung verbunden sein.

Die Verwendung eines Transponders zur Bereitstellung eines Schlüsselspeichers ist jedoch nicht zwingend notwendig. Alternativ kann der Schlüsselspeicher auch durch einen Speicherchip, wie z. B. einen FLASH-Speicher, einen optischen Speicher, oder sogar durch einen grafischen Code, wie z. B. einen Strich- oder Punkt-Code, realisiert werden. Gegenüber einem Speicherchip hat der Transponder den Vorteil einer über die Resonanzstruktur des Transponders integrierten Energieversorgung.

Obwohl die Bereitstellung eines einzelnen Schlüsselspeichers zur Aufnahme des mindestens einen kryptologischen Schlüssels und optional weiterer Schlüsseldaten zur Implementierung der Erfindung ausreichend ist, kann die Bereitstellung von mehreren Schlüsselspeichern für spezielle Anwendungen der Erfindung von Vorteil sein. Beispielsweise können die Probendaten eine Datenstruktur mit verschiedenen Typen von Probendaten (Probendatentypen) aufweisen. Die Probendatentypen können jeweils z. B. Informationen über die Probenquelle (personenbezogene Daten, Spenderdaten), Informationen über die Gewinnung der Probe, Informationen über die Bearbeitung der Probe, Informationen über gemessene Eigenschaften (Messwerte) der Probe und/oder Informationen über Lagerungsbedingungen (Temperaturprofile oder dergleichen) umfassen. Für jeden der Probendatentypen kann in der Schlüsselspeichereinrichtung ein spezifischer kryptologischer Schlüssel gespeichert sein. Gemäß einer bevorzugten Ausführungsform der Erfindung sind in diesem Fall mehrere Schlüsselspeicher vorgesehen, die zur Speicherung jeweils eines kryptologischen Schlüssels für einen der Probendatentypen eingerichtet sind. Vorteilhafterweise kann damit die Anonymisierung spezifisch für einzelne Probendatentypen realisiert werden.

Alternativ oder zusätzlich kann die Datenspeichereinrichtung mehrere Speicherbereiche umfassen, die physikalisch voneinander getrennt und zur Speicherung von jeweils einem der Probendatentypen eingerichtet sind. In diesem Fall kann jeder der Schlüsselspeicher jeweils einem der Speicherbereiche zugeordnet sein.

Die Bereitstellung von mehreren Schlüsselspeichern kann ferner von Vorteil sein, um verschiedene Typen von Schlüsseldaten (Schlüsseldatentypen), z. B. den mindestens einen kryptologischen Schlüssel oder mindestens einen Teil-Schlüssel, den mindestens einen Identifizierungs-Schlüssel und den Master-Schlüssel getrennt zu speichern. Diese Ausführungsform der Erfindung hat Vorteile in Bezug auf eine hohe Flexibilität bei der Anwendung von verschiedenen Verfahren zur Anonymisierung und/oder Re-Identifizierung, die im Folgenden beschrieben sind.

Gemäß einer ersten Variante des erfindungsgemäßen Verfahrens ist in der Schlüsselspeichereinrichtung ein einziger kryptologischer Schlüssel gespeichert, mit dem die Probendaten ver-oder entschlüsselt werden. Zur reversiblen oder irreversiblen Anonymisierung der Probe kann vorgesehen sein, den Schlüsselspeicher mit dem kryptologischen Schlüssel jeweils entsprechend für eine bestimmte Anonymisierungszeit oder dauerhaft von der Probenträgereinrichtung zu trennen.

Gemäß einer Abwandlung der ersten Variante sind in der Schlüsselspeichereinrichtung, vorzugsweise in verschiedenen Schlüsselspeichern, verschiedene kryptologische Schlüssel gespeichert, die zur Verschlüsselung verschiedener Probendatentypen und/oder verschiedener Speicherbereiche der Probendatenspeichereinrichtung vorgesehen sind. Zur reversiblen oder irreversiblen Anonymisierung können entsprechende Schlüsselspeicher mit den verschiedenen kryptologischen Schlüsseln zeitweilig oder dauerhaft von der Probenträgereinrichtung getrennt werden.

Gemäß einer zweiten Variante des erfindungsgemäßen Verfahrens wird der mindestens eine kryptologische Schlüssel in der Schlüsselspeichereinrichtung und zusätzlich in einer Schlüssel-Datenbank gespeichert, die von der Probenträgereinrichtung getrennt und vorzugsweise mit der Datenverarbeitungseinrichtung gemäß dem oben genannten zweiten Gesichtspunkt der Erfindung verbunden ist. Des Weiteren wird mindestens ein Identifizierungs-Schlüssel in der Schlüsselspeichereinrichtung gespeichert. Der Identifizierungs-Schlüssel umfasst eine Information, mit welcher der mindestens eine kryptologische Schlüssel in der Schlüssel-Datenbank identifiziert wird, wie z. B. eine Speicheradresse des kryptologischen Schlüssels-in der Schlüssel-Datenbank. Alternativ oder zusätzlich kann diese Information kann, insbesondere als weitere Möglichkeit der reversiblen Anonymisierung, auch der Datenspeichereinrichtung hinterlegt sein. Dadurch ist die Probe dann aber stets höchstens reversibel anonymisiert.

Der mindestens eine kryptologische Schlüssel und der mindestens eine Identifizierungs-Schlüssel werden in verschiedenen Schlüsselspeichern der Schlüsselspeichereinrichtung gespeichert. Zur Anonymisierung der Probe kann zunächst der mindestens eine kryptologische Schlüssel von der Probenträgereinrichtung getrennt werden, wobei eine zeitweilige oder dauerhafte Trennung vorgesehen sein kann. Beider zweiten Variante des erfindungsgemäßen Verfahrens kann auch bei der dauerhaften Trennung des mindestens einen kryptologischen Schlüssels von der Probenträgereinrichtung die Anonymisierung umgekehrt werden (Re-Identifizierung). Hierzu wird der mindestens eine kryptologische Schlüssel unter Verwendung des mindestens einen Identifizierungs-Schlüssels aus der Schlüssel-Datenbank gelesen und zur Verschlüsselung oder Entschlüsselung der Probendaten verwendet. Wenn auch der mindestens eine Schlüsselspeicher mit dem mindestens einen Identifizierungs-Schlüssel von der Probenträgereinrichtung getrennt wird, kann der mindestens eine kryptologische Schlüssel in der Schlüssel-Datenbank nicht mehr identifiziert und gelesen werden. In diesem Fall ist die Re-Identifizierung ausgeschlossen.

Vorteilhafterweise ermöglicht die Verwendung des mindestens einen Identifizierungs-Schlüssels, dass eine Probe schnell und zuverlässig reversibel oder irreversibel anonymisiert wird, indem entsprechend nur der mindestens eine kryptologische Schlüssel oder sowohl der mindestens eine kryptologische Schlüssel als auch der mindestens eine Identifizierungs-Schlüssel von der Probenträgereinrichtung getrennt werden.

Gemäß einer dritten Variante des erfindungsgemäßen Verfahrens wird der mindestens eine kryptologische Schlüssel mit einem Master-Schlüssel verschlüsselt und in der Datenspeichereinrichtung der Probenträgereinrichtung gespeichert. In diesem Fall wird vorzugsweise der mindestens eine kryptologische Schlüssel in mindestens einem Schlüsselspeicher der Schlüsselspeichereinrichtung und höchstens ein Teil des Master-Schlüssels in einem weiteren Schlüsselspeicher der Schlüsselspeichereinrichtung gespeichert. Ein weiterer Teil des Master-Schlüssels kann in einem Quellenspeicher gespeichert sein, der von der Probenträgereinrichtung getrennt, z. B. am Ort der Erzeugung der Probe vorgesehen ist.

Bei der dritten Variante des erfindungsgemäßen Verfahrens kann im nicht-anonymisierten Zustand eine Verschlüsselung oder Entschlüsselung von Probendaten mit dem mindestens einen kryptologischen Schlüssel vorgesehen sein. Wenn der mindestens eine kryptologische Schlüssel entfernt und damit die Probe anonymisiert wurde, kann eine Re-Identifizierung vorgenommen werden, indem der verschlüsselte kryptologische Schlüssel aus der Datenspeichereinrichtung gelesen und mit dem Master-Schlüssel entschlüsselt wird. Anschließend kann der entschlüsselte kryptologische Schlüssel zur Entschlüsselung der Probendaten verwendet werden. Wenn ein Teil des Master-Schlüssels von der Probenträgereinrichtung getrennt aufbewahrt wird, kann die Re-Identifizierung nur am Ort der Aufbewahrung des getrennten Teils des Master-Schlüssels realisiert werden. Dies kann von Vorteil sein, wenn bestimmte Probendaten nur am Ort der Probenerzeugung, z. B. der Blutentnahme von einem Spender, vorgesehen sein soll.

Auch bei Verwendung des Master-Schlüssels kann eine irreversible Anonymisierung erreicht werden, indem der Schlüsselspeicher mit dem Teil vom Master-Schlüssel dauerhaft von der Probenträgereinrichtung getrennt wird.

Gemäß einer weiteren vorteilhaften Ausführungsform der erfindungsgemäßen Probenträgereinrichtung kann vorgesehen sein, dass jeder Schlüsselspeicher eine spezifische Markierung trägt. Die Markierung kann z. B. die Funktion des Schlüsselspeichers oder den Typ der in dem betreffenden Schlüsselspeicher gespeicherten Schlüsseldaten anzeigen. Alternativ oder zusätzlich kann die Markierung eine Identifikation zur Zuordnung eines entfernten Schlüsselspeichers zu einer Probe, z. B. eine Proben-Identifizierung (Proben-ID), umfassen. Insbesondere für eine zeitweise Entfernung des Schlüsselspeichers ist eine ID zur Neuzuordnung notwendig. Alternativ könnte die Proben-ID allerdings auch zusätzlich im Schlüsselspeicher gespeichert werden.

Es ist vorzugsweise eine visuell wahrnehmbare Markierung, wie z. B. eine Farbmarkierung oder eine Beschriftung der Schlüsselspeicher vorgesehen. Durch visuelle Betrachtung oder optische Detektion kann einfach festgestellt werden, welche Schlüsselspeicher von der Probenträgereinrichtung entfernt wurden. Somit kann einfach erfasst werden, ob die Probe reversibel oder irreversibel anonymisiert ist und/oder welche Datenbereiche der Datenspeichereinrichtung anonymisiert sind.

Weitere Einzelheiten und Vorteile der Erfindung werden im Folgenden unter Bezug auf die beigefügten Zeichnungen beschrieben. Es zeigen:
- Figuren 1 und 1A:: eine erste Ausführungsform der Probenträgereinrichtung und der Datenverarbeitungseinrichtung gemäß der Erfindung;
- Figur 2:: Merkmale weiterer Ausführungsformen der Probenträgereinrichtung und der Datenverarbeitungseinrichtung gemäß der Erfindung;
- Figur 3:: eine schematische Übersicht der Erzeugung, Lagerung und Verarbeitung von Proben und Probendaten;
- Figur 4:: eine schematische Übersichtsdarstellung der erfindungsgemäß vorgesehenen kryptologischen Verschlüsselung von Probendaten;
- Figuren 5 und 6:: Flussdiagramme zur Illustration einer ersten Variante des erfindungsgemäßen Verfahrens und einer irreversiblen Anonymisierung einer Probe;
- Figuren 7 und 8:: Flussdiagramme zur Illustration einer zweiten Variante des erfindungsgemäßen Verfahrens und einer reversiblen Anonymisierung einer Probe;
- Figur 9:: ein Flussdiagramm zur Illustration einer Re-Identifizierung bei der Variante gemäß Figur 7;
- Figuren 10 und 11:: Flussdiagramme zur Illustration einer dritten Variante des erfindungsgemäßen Verfahrens;
- Figuren 12 und 13:: Flussdiagramme zur Illustration einer reversiblen und einer irreversiblen Anonymisierung einer Probe beim Verfahren gemäß Figur 11; und
- Figur 14:: ein Flussdiagramm zur Illustration der Re-Identifizierung beim Verfahren gemäß Figur 11.

Bevorzugte Ausführungsformen der Erfindung werden im Folgenden unter beispielhaftem Bezug auf die Handhabung biologischer Proben und zugehöriger Probendaten bei der Gewinnung, Behandlung und Lagerung, insbesondere Kryokonservierung, der biologischen Proben beschrieben. Es wird betont, dass die Umsetzung der Erfindung nicht auf die Anwendung mit biologischen Proben beschränkt, sondern entsprechend auch mit anderen Proben, z. B. chemischen Proben oder Werkstücken möglich ist. Die Gewinnung, Handhabung und Kryokonservierung biologischer Proben sind an sich bekannt und werden daher hier im Einzelnen nicht beschrieben. Ebenso sind Probenträgereinrichtungen zur kombinierten Aufnahme von mindestens einer Probe und von Probendaten an sich bekannt, so dass deren Einzelheiten hier nicht beschrieben werden.

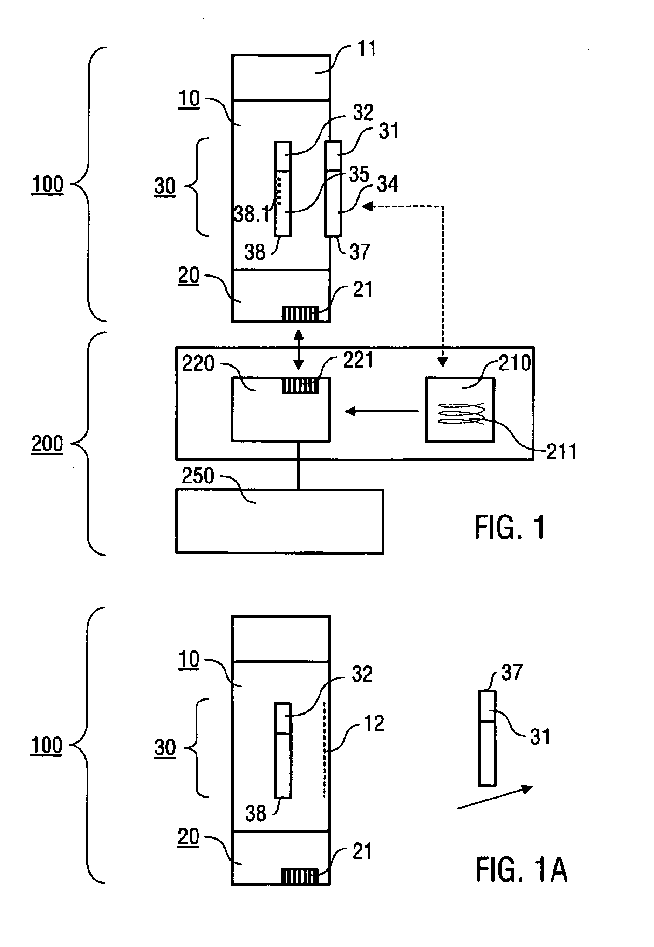

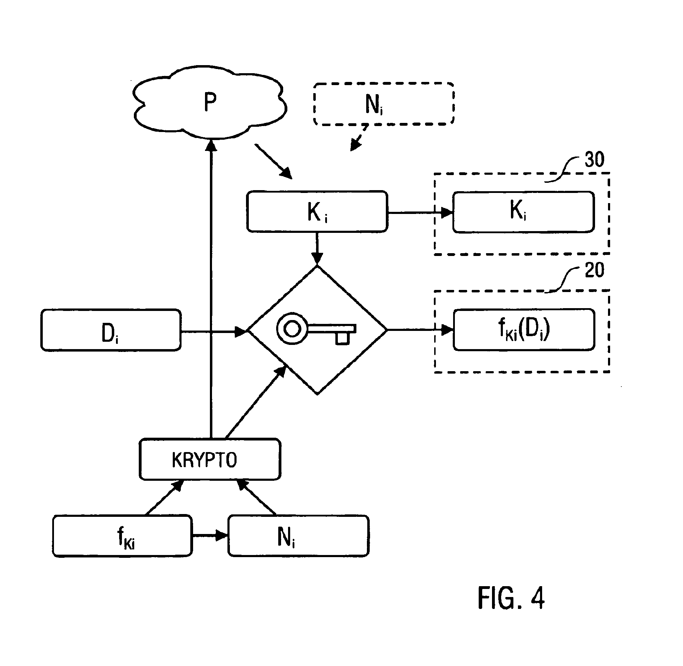

Im Folgenden werden zunächst unter Bezug auf die Figuren 1 bis 3 Merkmale bevorzugter Ausführungsformen einer erfindungsgemäßen Probenträgereinrichtung und einer erfindungsgemäßen Datenverarbeitungseinrichtung beschrieben. Anschließend werden unter Bezug auf die Figuren 4 bis 14 Einzelheiten der erfindungsgemäßen Verfahren zur Datenverarbeitung, insbesondere zur Ver- oder Entschlüsselung von Probendaten beschrieben.

### 1. Bevorzugte Ausführungsformen erfindungsgemäßer Probenträger- und Datenverarbeitungseinrichtungen

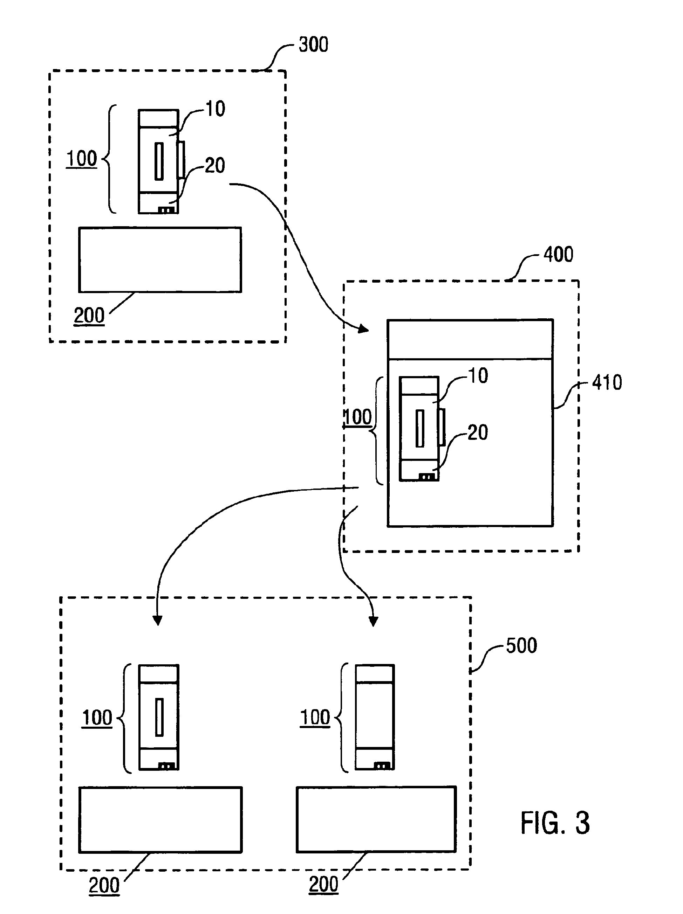

Figur 1 illustriert schematisch eine erste Ausführungsform einer erfindungsgemäßen Probenträgereinrichtung 100, eine erste Ausführungsform der erfindungsgemäßen Datenverarbeitungseinrichtung 200 und deren Kombination. Bei der praktischen Anwendung der Erfindung ist eine Vielzahl von Probenträgereinrichtungen 100 zur Aufnahme biologischer Proben vorgesehen, die mit einer oder mehreren Datenverarbeitungseinrichtungen 200, z. B. in einem Bereich 300 der Probenerzeugung oder einem Bereich 400 der Probenkonservierung (siehe Figur 3), koppelbar sind.

Die Probenträgereinrichtung 100 umfasst die Probenaufnahmeeinrichtung 10 und die Datenspeichereinrichtung 20, die miteinander fest verbunden sind. Die Probenaufnahmeeinrichtung 10 ist ein verschließbares Gefäß, z. B. ein Probenröhrchen mit einem Deckel 11, wobei die Datenspeichereinrichtung 20 mit dem Boden der Probenaufnahmeeinrichtung 10 fest verbunden ist. Die Datenspeichereinrichtung 20 kann alternativ mit dem Gefäß lösbar verbunden, z. B. angeschraubt oder angesteckt sein. Letzteres kann von Vorteil für Adapterlösungen sein, bei denen als Probenaufnahmeeinrichtung 10 ein Standard-Gefäß verwendet wird, das in eine Halterung eingesetzt wird, an die ein Sockel mit der Datenspeichereinrichtung 20 z. B. angeschraubt wird. Das Probenröhrchen kann im Spritzgussverfahren aus Kunststoff, z. B. Polypropylen, hergestellt sein, wobei die Datenspeichereinrichtung 20 im Falle eine festen Verbindung mittels Spritzguss mit dem Boden des Probenröhrchens verbunden ist. Die Probenaufnahmeeinrichtung 10 enthält einen Probenraum mit Dimensionen von z. B. 5 mm Durchmesser und 10 mm Höhe. Alternativ können mehrere getrennte Probenräume vorgesehen sein.

Die Datenspeichereinrichtung 20 umfasst einen digitalen Speicherchip, wie z. B. einen FLASH-EEPROM (FLASH-Speicher) mit einer Schnittstelle 21, über die eine Datenverbindung mit der Datenverarbeitungseinrichtung 200 herstellbar ist.

Die Probenträgereinrichtung 100 umfasst des Weiteren zusätzlich zu der Datenspeichereinrichtung 20 eine gesonderte Schlüsselspeichereinrichtung 30 mit mehreren Schlüsselspeichern 31, 32. Im illustrierten Beispiel sind auf der Außenseite der Probenträgereinrichtung 100 oder in deren Außenwand eingebettet Transponder 37, 38 vorgesehen, deren Transponderspeicher die Schlüsselspeicher 31, 32 bereitstellen und die jeweils mit einem Resonanzkreis 34, 35 ausgestattet sind. Die Transponder 37, 38 haben z. B. eine Stabform, wie es bei Transpondern vom Typ HITAG S256, Hersteller NXP (Niederlande) bekannt ist. Am Transponder 38 ist beispielhaft schematisch eine optische Markierung 38.1 illustriert, mit der visuell oder durch optische Detektion festgestellt werden kann, ob der Transponder 38 an der Probenträgereinrichtung 100 vorhanden ist oder nicht. Optische Markierungen können auch an den anderen Transpondern vorgesehen sein.

Die Transponder 37, 38 sind mit der Außenseite der Probenträgereinrichtung 100, z. B. aus Kunststoff, verbunden. Es kann z. B. eine Klebeverbindung, eine Kunststoffverbindung zwischen einer Kunststoffhülle der Transponder und der Probenträgereinrichtung 100, gebildet z. B. mit einem Spritzgussverfahren, oder eine Speicherhalterung, die für eine Steck-, Rast- und/oder Schraubverbindung ausgelegt ist, vorgesehen sein. Durch die Klebstoff- oder Kunststoffverbindung wird vorzugsweise zwischen den Transpondern 37, 38 und der Probenträgereinrichtung 100 eine Sollbruchstelle 12 gebildet, die schematisch in Figur 1A gezeigt ist und der irreversiblen Entfernung jeweils eines Transponders oder zumindest des zugehörigen Schlüsselspeichers von der Probenträgereinrichtung 100 dient. Die Entfernung mindestens eines Schlüsselspeichers von der Probenträgereinrichtung 100 ermöglicht eine irreversible oder reversible Anonymisierung, wie unten mit weiteren Einzelheiten beschrieben ist.

Aufgrund ihrer verschiedenen Funktionen haben die Datenspeichereinrichtung und die Schlüsselspeichereinrichtung typischerweise verschiedene Speicherkapazitäten, die für den mindestens einen Datenspeicher im Bereich von z. B. 512 kBit bis 16 MBit und für den mindestens einen Schlüsselspeicher im Bereich von z. B. 128 Bit bis 256 Bit gewählt sind. Diese Werte stellen Beispiele dar, die in Abhängigkeit von der konkreten Anwendung der Erfindung und den Anforderungen der Verschlüsselung variiert werden können. So kann eine Mindest-Größe für den Datenspeicher allgemein durch eine Blockgröße (ein N-Wert) angesehen werden, die bei symmetrischen Verfahren oft der Schlüssellänge entspricht. Die Größe des Datenspeichers kann bei Verwendung geeigneter Speicherchips das genannte Intervall übersteigen. Für den Schlüsselspeicher kann die Grenze 128 Bit als Minimum für symmetrische Verfahren angesehen werden, wohingegen 2048 Bit derzeit als Minimum für asymmetrische Verfahren (z. B. RSA) gilt. Derzeit sind für das CAST-Verfahren Schlüssel bis 512 Bit und für das RSA-Verfahren bis 4096 Bit möglich. Allerdings sind diese Grenzen, insbesondere mit der weiteren technischen Entwicklung, nach oben erweiterbar.

Die Datenverarbeitungseinrichtung 200 umfasst eine Schreib-Lese-Einrichtung 210, einen kryptologischen Prozessor 220 und optional eine Recheneinrichtung 250, wie z. B. einen Computer. Abweichend von der Illustration kann der kryptologische Prozessor 220 als Teil der Recheneinrichtung 250 vorgesehen sein. Der kryptologischen Prozessor 220 kann insbesondere durch ein Software-Programm realisiert werden, das in der Recheneinrichtung 250 abgearbeitet wird.

Die Schreib-Lese-Einrichtung 210 ist konfiguriert und/oder wird durch die Komponenten 220 oder 250 gesteuert, um Schlüsseldaten, die in den Schlüsselspeichern 31, 32 gespeichert sind, zu lesen und/oder um Schlüsseldaten in die Schlüsselspeicher 31, 32 zu speichern. Der kryptologische Prozessor 220 ist mit der Schreib-Lese-Einrichtung 220 verbunden und mit einer Schnittstelle 221 zur Datenverbindung mit der Datenspeichereinrichtung 20 einer an die Datenverarbeitungseinrichtung 200 angekoppelten Probenträgereinrichtung 100 ausgestattet. Der kryptologische Prozessor 220 ist zur Entschlüsselung und/oder Verschlüsselung von Probendaten oder Schlüsseldaten eingerichtet. Die Recheneinrichtung 250 kann zur Steuerung der Schreib-Lese-Einrichtung 210 und/oder des kryptologischen Prozessor 220 und/oder zur weiteren Datenverarbeitung verwendet werden.

Beim illustrierten Beispiel, in dem die Schlüsselspeicher 31, 32 für eine drahtlose Kommunikation mit der Datenverarbeitungseinrichtung 200 ausgelegt sind, enthält die Schreib-Lese-Einrichtung 210 eine schematisch illustrierte Antenne 211, mit der die Transponder 37, 38 einzeln oder gemeinsam ansprechbar sind. Die Schreib-Lese-Einrichtung 210 ist für eine Datenverbindung mit den Transpondern 37, 38 konfiguriert, wie dies von der herkömmlichen Transponder- oder RFID-Technik bekannt ist. Bei Betrieb der Antenne 211 können insbesondere Schlüsseldaten aus den Schlüsselspeichern 31, 32 ausgelesen werden. Die Schreib-Lese-Einrichtung 220 kann zusätzlich zum Schreiben von Daten in die Schlüsselspeicher 31, 32, wie z. B. zum erstmaligen Ablegen eines kryptologischen Schlüssels oder zur Veränderung von Schlüsseln ausgelegt sein.

Abweichend von der Illustration kann eine leitungsgebundene Kommunikation zwischen der Schlüsselspeichereinrichtung 30 und der Datenverarbeitungseinrichtung 200 vorgesehen sein. Des Weiteren kann eine leitungsgebundene oder leitungslose Datenverbindung zwischen der Schlüsselspeichereinrichtung 30 und der Datenspeichereinrichtung 20 vorgesehen sein.

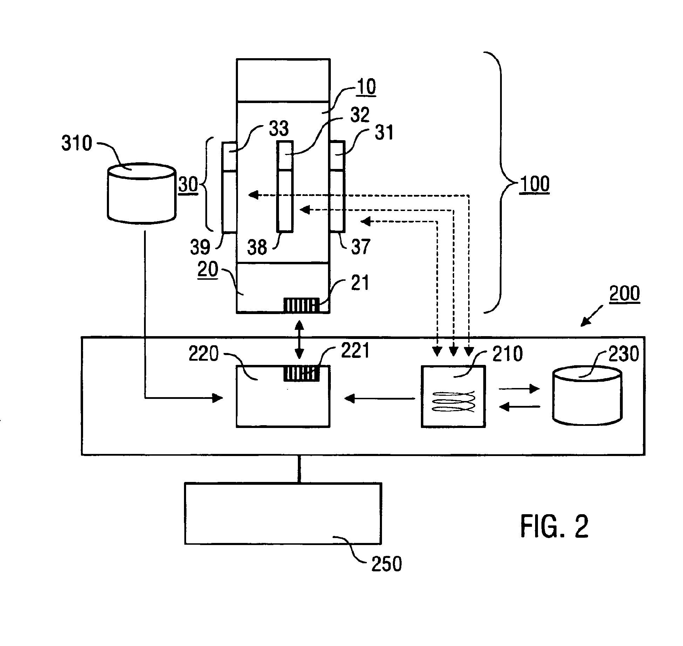

Figur 2 illustriert schematisch Merkmale abgewandelter Ausführungsformen der erfindungsgemäßen Probenträgereinrichtung 100 und der erfindungsgemäßen Datenverarbeitungseinrichtung 200 sowie deren gegenseitiger Kombination. Gemäß Figur 2 ist die Probenträgereinrichtung 100 wie im Beispiel gemäß Figur 1 mit einer Probenaufnahmeeinrichtung 10, einer Datenspeichereinrichtung 20 und einer Schlüsselspeichereinrichtung 30 gebildet. Die Schlüsselspeichereinrichtung 30 umfasst im illustrierten Beispiel drei Transponder 37, 38 und 39, deren Transponderspeicher jeweils einen der Schlüsselspeicher 31, 32 und 33 bereitstellen. Die Transponder 37, 38 und 39 sind wie im Beispiel von Figur 1 mit der Probenträgereinrichtung 100 fest oder über eine Sollbruchstelle oder eine Speicherhalterung lösbar verbunden.

Die Datenverarbeitungseinrichtung 200 umfasst eine Schreib-Lese-Einrichtung 210, einen kryptologischen Prozessor 220, und eine Schlüssel-Datenbank 230. Des Weiteren ist wie im Beispiel von Figur 1 optional eine Recheneinrichtung 250, wie z. B. ein Computer vorgesehen, die mit den anderen Komponenten der Datenverarbeitungseinrichtung 200 verbunden ist.

Das Beispiel von Figur 2 ist für eine reversible Anonymisierung der Probendaten unter Verwendung eines Identifizierungs-Schlüssels und/oder eines Master-Schlüssels konfiguriert.

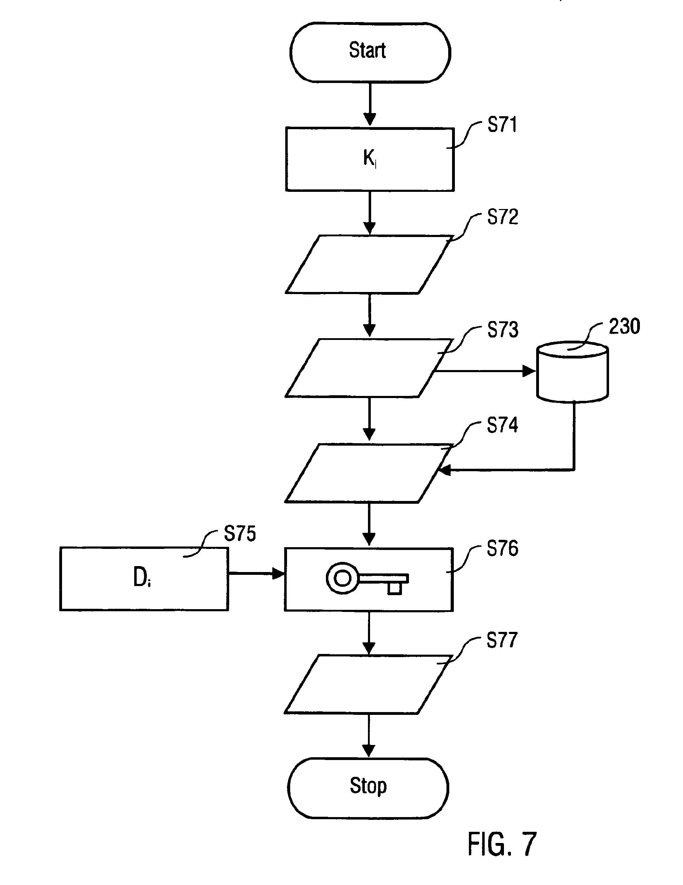

Gemäß der ersten Variante ist im Schlüsselspeicher 31 des ersten Transponders 37 der kryptologische Schlüssel für die Verschlüsselung der Probendaten gespeichert, während der Schlüsselspeicher 32 des zweiten Transponders 38 einen Identifizierungs-Schlüssel enthält. Der kryptologische Schlüssel ist auch in der Schlüssel-Datenbank 230 gespeichert. Die Speicherung erfolgt mit einer bestimmten Speicherposition oder mit einer anderen eindeutigen Identifizierung, wobei der im Schlüsselspeicher 32 enthaltene Identifizierungs-Schlüssel auf den Speicherort oder die andere Identifizierung des in der Schlüssel-Datenbank 230 gespeicherten kryptologischen Schlüssels verweist. Bei dieser Variante kann durch Entfernung des ersten Transponders 37 eine reversible Anonymisierung, unter Verwendung des Identifizierungs-Schlüssels im zweiten Transponder 38 eine Re-Identifizierung und bei Entfernung auch des zweiten Transponders 38 eine irreversible Anonymisierung der Probendaten erzielt werden, wie mit weiteren Einzelheiten unten Beschrieben wird (siehe Figuren 7 bis 9).

Gemäß der zweiten Variante ist im Schlüsselspeicher 33 des dritten Transponders 39 ein Teil eines Master-Schlüssels gespeichert, während in einer Quellen-Datenbank 310 ein weiterer Teil des Master-Schlüssels gespeichert ist. Der kryptologische Schlüssel ist im Schlüsselspeicher 31 des ersten Transponders 37 und unter Verwendung des Master-Schlüssels, umfassend beide genannten Teile, verschlüsselt in der Datenspeichereinrichtung 20 abgelegt. Durch Lesen des im Schlüsselspeicher 33 gespeicherten Teils des Master-Schlüssels mit der Schreib-Lese-Einrichtung 210 und die Kombination dieses Teils des Master-Schlüssels mit dem anderen Teil aus der Quellen-Datenbank 310 wird der Master-Schlüssel erzeugt, mit dem der verschlüsselt in der Datenspeichereinrichtung 20 abgelegte kryptologische Schlüssel entschlüsselbar ist. Bei der zweiten Variante kann somit eine reversible Anonymisierung durch die Entfernung des ersten Transponders 37 mit dem kryptologischen Schlüssel, eine Re-Identifizierung unter Verwendung des Master-Schlüssels und eine endgültige irreversible Anonymisierung durch Entfernung des dritten Transponders 39 vorgesehen sein. Die Re-Identifizierung ist im illustrierten Beispiel mit zwei Teilen des Master-Schlüssels nur bei Kopplung der Datenverarbeitungseinrichtung 200 mit dem Quellen-Datenspeicher 310, z. B. am Ort der Probenerzeugung, möglich. Die beiden Varianten mit einer Re-Identifizierung unter Verwendung des Identifizierungs-Schlüssels oder des Master-Schlüssels können ferner miteinander kombiniert werden.

Wenn alternativ ein Verfahren ohne den Quellen-Datenspeicher 300 vorgesehen wäre, bei dem der komplette Master-Schlüssel im Schlüsselspeicher 33 des dritten Transponders 39 enthalten ist, würde zusätzlich ein Passwort oder dergleichen erforderlich sein, um eine Anonymisierung zu erhalten.

Figur 3 illustriert schematisch die Anwendung der Erfindung bei der Erzeugung, Lagerung und weiteren Handhabung biologischer Proben. Zunächst ist in einem Bereich 300 der Probenerzeugung vorgesehen, eine Probe und zugehörige Probendaten in einer Probenträgereinrichtung 100 zu speichern. Es erfolgt mit an sich bekannter Labortechnik eine Probenentnahme, wie z. B. eine Blutentnahme oder eine Biopsie von einem Probenspender und die Überführung der Probe in die Probenaufnahmeeinrichtung 10. Mit einer Datenverarbeitungseinrichtung 200, z. B. gemäß Figur 1 oder 2 werden Probendaten in der Datenspeichereinrichtung 20 der Probenträgereinrichtung 100 abgelegt. Bei der erstmaligen Aufnahme von Proben kann die Erzeugung und Ablage des kryptologischen Schlüssels zur Verschlüsselung der Probendaten vorgesehen sein (siehe Figur 4). Anschließend kann die Probenträgereinrichtung 100 in einem Bereich 400 zur Konservierung der Probe gelagert werden. Es ist beispielsweise eine Kryospeichereinrichtung 410, wie z. B. ein Tank vorgesehen, in dem die Probenträgereinrichtung 100 auf eine Temperatur des flüssigen Stickstoffs oder des Dampfs von flüssigem Stickstoff abgekühlt wird. In Abhängigkeit von der konkreten Anwendung der Erfindung kann nach einer Lagerungszeit die Überführung der Probenträgereinrichtung 100 in einen Bereich 500 zur Probenbearbeitung mit einer oder mehreren Arbeitsstationen vorgesehen sein. Im Bereich 500 kann die Probe durch die Entfernung eines ersten Schlüsselspeichers mit dem kryptologischen Schlüssel reversibel anonymisiert (links im Bereich 500) oder durch Entfernung aller Schlüsselspeicher irreversibel anonymisiert (rechts im Bereich 500) sein. Des Weiteren kann im Bereich 500 unter Verwendung einer Datenverarbeitungseinrichtung 200 ein Lesen und/oder Ergänzen von Probendaten vorgesehen sein.

### 2. Bevorzugte Ausführungsformen erfindungsgemäßer Verfahren zur Verarbeitung von Probendaten

Die Erzeugung des kryptologischen Schlüssels, die Ablage des kryptologischen Schlüssels in der Schlüsselspeichereinrichtung 30 und die Verschlüsselung von Probendaten ist schematisch in Figur 4 illustriert.

Die Erzeugung eines konkret verwendeten kryptologischen Schlüssels, z. B. in der Datenverarbeitungseinrichtung 200, basiert zunächst auf der Bereitstellung eines Kryptosystems KRYPTO mit Verschlüsselungsfunktionen f_{Ki} für einen Schlüssel Kᵢ, optional mit Verschlüsselungsparametern N₁, ..., Nₙ. Das Kryptosystem KRYPTO ist vorzugsweise ein an sich bekanntes Standard-Kryptosystem, wie es aus der Fachliteratur bekannt ist. Es kann auf einem symmetrischen Algorithmus (Secret Key Algorithmus), wie z. B. die Kryptosysteme DES, AES und CAST, oder auf einem asymmetrischen Algorithmus basieren. Das Kryptosystem und die Parameter Nᵢ werden so gewählt, dass der resultierende Schlüsselraum P Schlüssel beinhaltet (möglichst ausschließlich), die im Schlüsselspeicher gespeichert werden können. Der aus dem Kryptosystem KRYPTO resultierende Schlüssel wird im Schlüsselspeicher der Schlüsselspeichereinrichtung 30 abgelegt. Typischerweise wird basierend auf dem gegebenen Kryptosystem, den im Schlüsselraum P verfügbaren Schlüsseln und ggf. den Parametern Nᵢ ein konkret zu verwendender Schlüssel Kᵢ bestimmt, der in der Schlüsselspeichereinrichtung 30 abgelegt und dem kryptologischen Prozessor 220 (siehe Figuren 1, 2) zugeführt wird. Typischerweise ist die Erzeugung des kryptologischen Schlüssels Kᵢ am Ort der Probenerzeugung, z. B. im Bereich 300 (siehe Figur 3) vorgesehen. Die Erzeugung des kryptologischen Schlüssels Kᵢ erfolgt vorzugsweise zufällig , d. h. durch eine zufallsbasierte Auswahl.

Beim Schreiben der Probendaten Dᵢ in die Datenspeichereinrichtung 20 werden die Probendaten Dᵢ im kryptologischen Prozessor der Verschlüsselung mit dem Schlüssel Kᵢ unterzogen, so dass die verschlüsselten (geheimen) Probendaten f_{Ki}(Dᵢ) erzeugt werden.

Wenn mehrere, getrennt zu verschlüsselnde Probendatentypen D₁, ..., Dₙ, wie z. B. verschiedene Informationen innerhalb der Probendaten, vorgesehen sind, wird das Schema gemäß Figur 4 so modifiziert, dass für jeden Probendatentyp ein gesonderter kryptologischer Schlüssel K₁, ..., Kₙ erzeugt und in einem entsprechenden Schlüsselspeicher abgelegt und zur Verschlüsselung der entsprechenden Probendatentypen D₁, ..., Dₙ verwendet wird.

Die Parameter Nᵢ können zum Entschlüsseln der Probendaten erforderlich sein und in einem Klartext-Bereich (Klartext-Header) in der Datenspeichereinrichtung 20 gespeichert sein.

Das Kryptosystems KRYPTO basiert auf Grund der kurzen Schlüssellängen (≤ 256 Bit derzeit, z. B. 128, 192 oder 256 Bit, Speicherkapazität kleiner Transponder meist sehr begrenzt) und vergleichsweise hohen Angriffssicherheit bei im Vergleich zu asymmetrischen Systemen kurzen Schlüsseln bevorzugt auf einem Block-Chiffre (Blockverschlüsselung). In einem konkreten Beispiel wird der Block-Chiffre CAST mit einer Blocklänge/Schlüssellänge von 128 Bit eingesetzt. CAST-128 ist definiert im RFC 2144 (http://www.faqs.org/rfcs/rfc2144.html), CAST-256 in RFC 2612 (http://tools.ietf.org/html/rfc2612). Zu den Block-Chiffren zählen auch die bekannten AES-Chiffre (Rijndeal) oder Twofish. Alternativ sind andere Systeme anwendbar, so sind z. B. mit Hilfe von public/private-Key-Systemen Szenarien realisierbar, in denen bestimmte Stationen nur Daten schreiben können (mit Hilfe des public key) und andere Stationen lesen und schreiben können (lesen erfordert den private key).

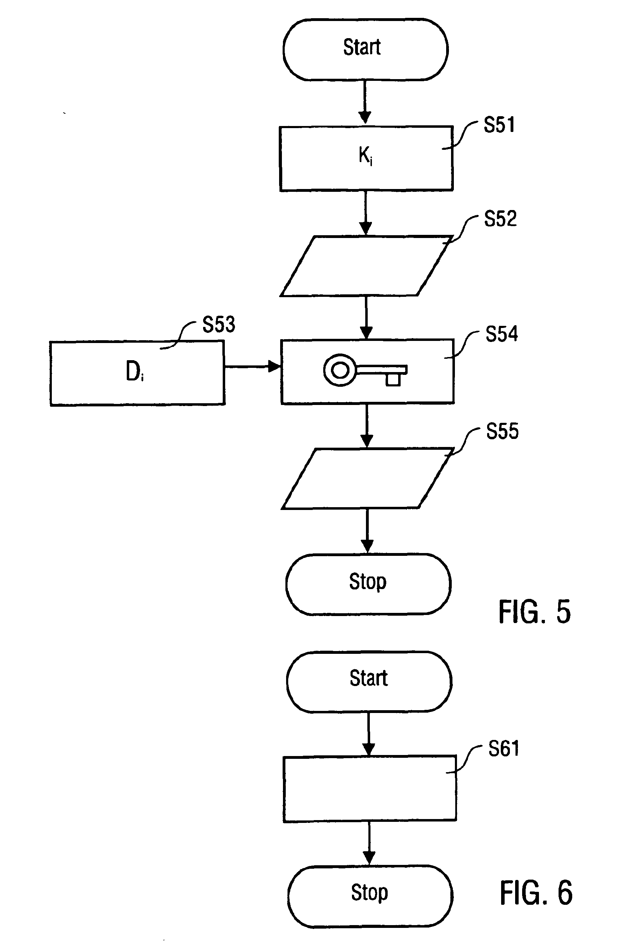

Die Figuren 5 und 6 illustrieren eine Ausführungsform des erfindungsgemäßen Verfahrens mit einer irreversiblen Anonymisierung (One-Way-Anonymisierung). Gemäß Figur 5 erfolgen zunächst die Erzeugung des kryptologischen Schlüssels (Schritt S51) und die Ablage des kryptologischen Schlüssels, z. B. im Schlüsselspeicher 31 (Transponderspeicher) eines ersten Transponders 37 in Figur 1 (Schritt S52). Die Schritte S51 und S52 sind typischerweise einmalig, z. B. bei der erstmaligen Aufnahme einer Probe in der Probenträgereinrichtung vorgesehen. In Abhängigkeit von der Anwendung der Erfindung können die Schritte S51 und S52 jedoch auch bei der weiteren Verarbeitung der Probe wiederholt werden. Es kann auch vorgesehen sein, dass zusätzlich zu einem ersten, bei der ursprünglichen Aufnahme der Probe erzeugten kryptologischen Schlüssel mindestens ein weiterer kryptologischer Schlüssel, z. B. für vorbestimmte Probendatentypen erzeugt wird.

Nach Bereitstellung der zu speichernden Probendaten Dᵢ (Schritt S53) wird im kryptologischen Prozessor 220 (siehe Figuren 1, 2) die Verschlüsselung der Probendaten durchgeführt (Schritt S54). Anschließend folgt die Ablage der verschlüsselten Probendaten in der Datenspeichereinrichtung (Schritt S55). Im Ergebnis liegen der mindestens eine kryptologische Schlüssel in der Schlüsselspeichereinrichtung und die verschlüsselten Probendaten in der Datenspeichereinrichtung der erfindungsgemäßen Probenträgereinrichtung vor.

Um die Probe irreversibel zu anonymisieren, indem ein zukünftiger Zugriff auf bestimmte Probendatentypen, insbesondere personenbezogene Daten, unumkehrbar verhindert wird, wird gemäß Figur 6 der Schlüsselspeicher 31 mit dem kryptologischen Schlüssel von der Probenträgereinrichtung 100 entfernt (Schritt S61). Beispielsweise wird der erste Transponder 37, der den kryptologischen Schlüssel enthält, von der Probenträgereinrichtung 100 abgebrochen (siehe Figur 1A). Ohne den Transponder 37 kann der kryptologische Schlüssel an der Datenverarbeitungseinrichtung 200 nicht mehr gelesen werden, so dass die Probendaten in der Datenspeichereinrichtung 20 nicht mehr entschlüsselbar sind. Die Probe ist somit bei Weitergabe ohne den ersten Transponder 37 anonymisiert.

Merkmale einer abgewandelten Ausführungsform des erfindungsgemäßen Verfahrens, bei der eine reversible Anonymisierung der Probe vorgesehen ist, sind in den Figuren 7 bis 9 illustriert.

Gemäß Figur 7 wird zunächst ein kryptologischer Schlüssel erzeugt (Schritt S71), der im Schlüsselspeicher 31 (Transponderspeicher) des ersten Transponders 37 in Figur 1 (Schritt S72) und in einer Schlüssel-Datenbank 230 (siehe Figur 2) gespeichert wird (Schritt S73). Daten, die ein eindeutiges Auslesen des kryptologischen Schlüssels aus der Schlüssel-Datenbank 230 erlauben und als Identifizierungs-Schlüssel bezeichnet sind, werden aus der Schlüssel-Datenbank 230 gelesenen (oder bei der Schlüsselerzeugung mit erzeugt) und im Schlüsselspeicher 32 (Transponderspeicher) des zweiten Transponders 38 (siehe z. B. Figur 1) gespeichert (Schritt S74). Als Identifizierungs-Schlüssel wird z. B. ein fortlaufender (von der Datenbank erzeugter) Zeilen-Index oder ein eigener Identifizierer verwendet, der dann ebenfalls von der Datenverarbeitungseinrichtung 200 erzeugt und in der Schlüssel-Datenbank 230 abgelegt werden würde. Der Identifizierungs-Schlüssel umfasst z. B. die Information über den Speicherort des kryptologischen Schlüssels in der Schlüssel-Datenbank 230. Im Ergebnis ist der kryptologische Schlüssel auf dem ersten Transponder 37 und der Identifizierungs-Schlüssel auf dem zweiten Transponder 38 gespeichert.

Nachfolgend werden die bei Schritt S75 bereitgestellten Probendaten verschlüsselt (Schritt S76) und als verschlüsselte Daten in der Datenspeichereinrichtung 20 der Probenträgereinrichtung 100 (siehe Figur 1) gespeichert (Schritt S77).

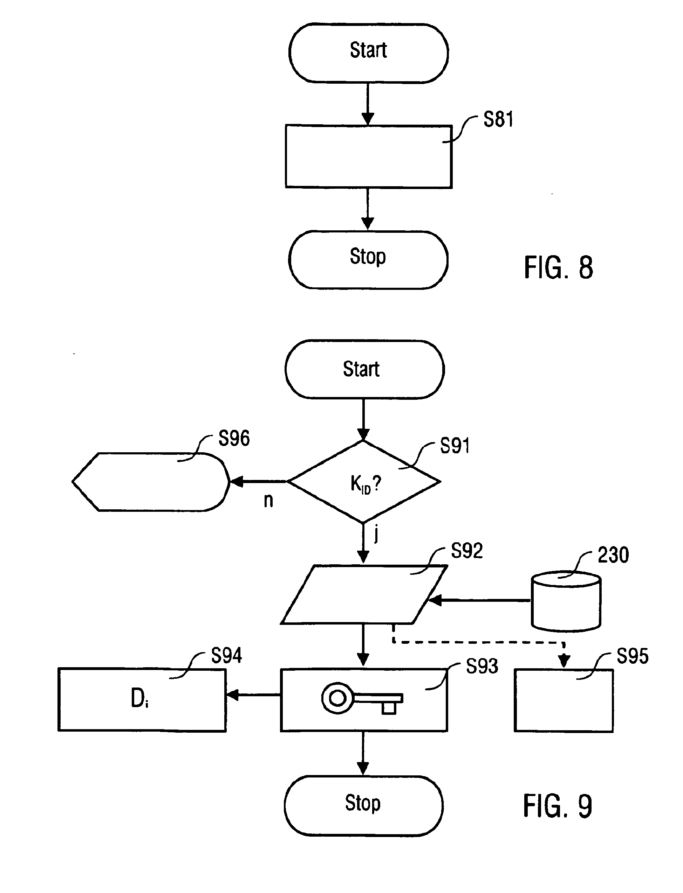

Mit dem Verfahren gemäß Figur 7 kann die Probe reversibel anonymisiert und re-identifiziert werden, wie in den Figuren 8 und 9 illustriert ist. Die reversible Anonymisierung umfasst zunächst die Entfernung des kryptologischen Schlüssels von der Probenträgereinrichtung 100. Hierzu wird gemäß Schritt S81 der erste Transponder 37, in dessen Transponderspeicher der kryptologische Schlüssel gespeichert ist, von der Probenträgereinrichtung 100 getrennt (siehe Figur 1A). Im Ergebnis können die in der Datenspeichereinrichtung 20 gespeicherten Probendaten, insbesondere personenbezogene Daten, nicht mehr entschlüsselt werden, so dass die Proben nicht mehr einem bestimmten Spender zugeordnet werden kann.

Wenn eine Re-Identifizierung der Probe erforderlich ist, z. B. um weitere Daten über den Spender den Probendaten zuzufügen, kann gemäß Figur 9 nach einer Prüfung, ob der Identifizierungs-Schlüssel an der Probenträgereinrichtung 100 vorhanden ist (Schritt S91), der kryptologische Schlüssel aus der Schlüssel-Datenbank 230 unter Verwendung des Identifizierungs-Schlüssels gelesen werden (Schritt S92). Nachfolgend können Probendaten, die mit dem kryptologischen Schlüssel verschlüsselt in der Datenspeichereinrichtung 20 gespeichert sind, aus dieser gelesen werden (Schritt S93), wodurch die entschlüsselten Probendaten bereitgestellt werden (Schritt S94).

Das Verfahren gemäß Figur 9 kann entsprechend verwendet werden, um aus der Schlüssel-Datenbank 230 den kryptologischen Schlüssel abzufragen und für eine Verschlüsselung von weiteren Probendaten zu verwenden, die verschlüsselt in der Datenspeichereinrichtung 20 gespeichert werden sollen. Des Weiteren kann optional nach Schritt S92 die Speicherung des aus der Schlüssel-Datenbank 230 gelesenen kryptologischen Schlüssels in einer weiteren, an der Probenträgereinrichtung 100 vorhandenen Schlüsselspeichereinrichtung vorgesehen sein (Schritt S95), um für weitere Ver- oder Entschlüsselungsvorgänge bereitzustehen.

Das Verfahren gemäß Figur 9 kann nur bei Bestehen einer Datenkommunikation mit der Schlüssel-Datenbank 230 realisiert werden. Um sicherzustellen, dass die Re-Identifizierung nur an dem Ort, an dem die Schlüssel-Datenbank 230 physikalisch vorhanden ist, z. B. einem Laboratorium oder einem Krankenhaus, erfolgt, ist bei einer erfindungsgemäßen Datenverarbeitungseinrichtung 200 vorzugsweise vorgesehen, dass die Schlüssel-Datenbank 230 innerhalb der Datenverarbeitungseinrichtung 200 angeordnet und leitungsgebunden mit der Schreib-Lese-Einrichtung 210 und/oder dem kryptologischen Prozessor 220 elektrisch verbunden ist.

Eine endgültige Anonymisierung (irreversible Anonymisierung) kann bei dem Verfahren gemäß Figur 7 realisiert werden, indem sowohl der kryptologische Schlüssel als auch der Identifizierungs-Schlüssel von der Probenträgereinrichtung 100 entfernt werden. Beispielsweise werden beide Transponder 37 und 38, die jeweils den kryptologischen Schlüssel und den Identifizierungs-Schlüssel enthalten, von der Probenträgereinrichtung 100 abgebrochen. In diesem Fall ergibt der Test bei Schritt S91 in Figur 9 ein Negativergebnis, so dass eine Re-Identifizierung (De-Anonymisierung) nicht möglich ist (Schritt S96).

Die Verwendung des Identifizierungs-Schlüssels gemäß den Figuren 7 bis 9 kann so modifiziert werden, dass in der Schlüssel-Datenbank 230 nicht der ursprüngliche kryptologische Schlüssel, sondern ein abgewandelter kryptologischer Schlüssel gespeichert wird. Der abgewandelte kryptologische Schlüssel kann unter Verwendung des Identifizierungs-Schlüssels aus der Schlüssel-Datenbank 230 gelesen und zur Verschlüsselung von Probendaten verwendet werden, die nachfolgend in der Datenspeichereinrichtung 20 gespeichert werden sollen.

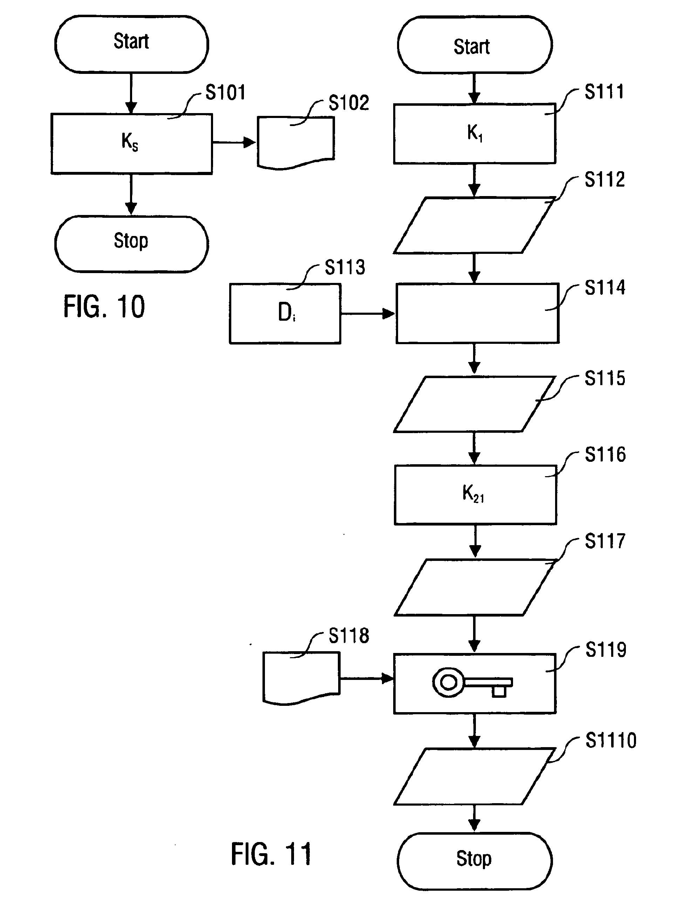

Merkmale einer weiteren Ausführungsform des erfindungsgemäßen Verfahrens unter Verwendung eines Master-Schlüssels sind in den Figuren 10 bis 14 illustriert. In der Illustration wird angenommen, dass sich der Master-Schlüssel aus zwei Teilschlüsseln, nämlich dem Quellen-Teilschlüssel und dem Proben-Teilschlüssel zusammensetzt, die nur gemeinsam, z. B. am Ort der Probenerzeugung (z. B. Bereich 300 in Figur 3) anwendbar sind. Alternativ kann ein einheitlicher Master-Schlüssel verwendet werden, der ausschließlich am Ort der Probenerzeugung vorgesehen ist.

Figur 10 illustriert die Erzeugung des Quellen-Teilschlüssels K_{S} im Bereich 300 der Erzeugung der Probe (Schritt S101) und die Speicherung des Quellen-Teilschlüssels K_{S} in der Datenverarbeitungseinrichtung 200 (Schritt S102). Es ist anzumerken, dass insbesondere bei symmetrischen Verfahren zur Erzeugung eines Teilschlüssels nicht jedes Mal auch ein neuer Teilschlüssel K_{S} erzeugt werden muss. Zum Beispiel kann bei Blockchiffren K_{S} einfach ein 64 Bit Schlüssel sein, während der Probenteilschlüssel dann ein beliebiger anderer 64 Bit Schlüssel sein könnte. Zum Ver- und Entschlüsseln werden dann beide zu einem 128 Bit Schlüssel zusammengesetzt, z. B. hintereinander angeordnet (siehe auch Figur 11).

Gemäß Figur 11 ist mit den ersten Schritten die Erzeugung des kryptologischen Schlüssels K₁ (Schritt S111), die Speicherung des kryptologischen Schlüssels K₁ (Schritt S112) auf dem ersten Transponder 37 (siehe Figur 1), die Bereitstellung der zu sichernden Probendaten Dᵢ (Schritt S113), deren Verschlüsselung (Schritt S114) und deren Speicherung (Schritt S115) in der Datenspeichereinrichtung 20 gezeigt. Diese Schritte werden wie die Schritte S51 bis S55 in Figur 5 realisiert.

In einer weiteren Schrittfolge ist die Erzeugung des Proben-Teilschlüssels K₂₁ vorgesehen (Schritt S116), der auf dem zweiten Transponder 38 gespeichert wird (Schritt S117). Nach Bereitstellung des Quellen-Teilschlüssels K_{S} (Schritt S118) erfolgt die Verschlüsselung des kryptologischen Schlüssels K₁ mit einem Master-Schlüssel p₂, der aus dem Proben-Teilschlüssel K₂₁ und dem Quellen-Teilschlüssel K_{S} zusammengesetzt ist (Schritt S119). Der verschlüsselte kryptologische Schlüssel K₁ wird auf der Datenspeichereinrichtung 20 der Probenträgereinrichtung 100 gespeichert (Schritt S1110). Im Ergebnis sind in der Datenspeichereinrichtung 20 die verschlüsselten Probendaten (aus Schritt S114) und der verschlüsselte kryptologische Schlüssel K₁ (aus Schritt S1110) gespeichert.

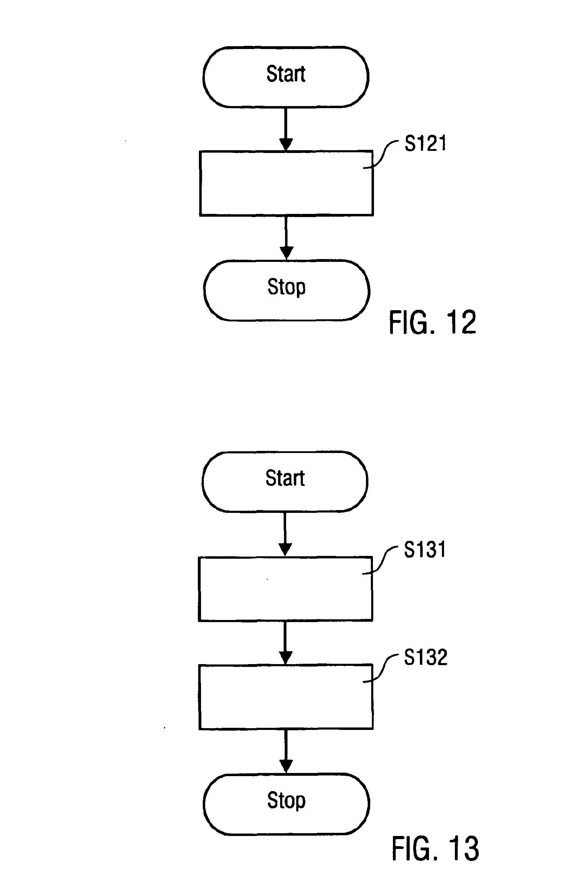

Eine reversible Anonymisierung der Probe wird durch die Entfernung des ersten Transponders 37 mit dem kryptologischen Schlüssel von der Probenträgereinrichtung gemäß Figur 12 erreicht (Schritt S121). Wenn hingegen sowohl der erste Transponder 37 als auch der zweite Transponder 38 entsprechend mit dem kryptologischen Schlüssel K₁ und dem Proben-Teilschlüssel K₂₁ von der Probenträgereinrichtung 100 getrennt werden (Schritte S131 und S132 in Figur 13), wird die Probe irreversibel anonymisiert. Durch die Entfernung des Proben-Teilschlüssels K₂₁ wird eine spätere Entschlüsselung des in der Datenspeichereinrichtung gespeicherten, verschlüsselten kryptologischen Schlüssels ausgeschlossen, so dass die verschlüsselten Probendaten nicht mehr entschlüsselbar sind.

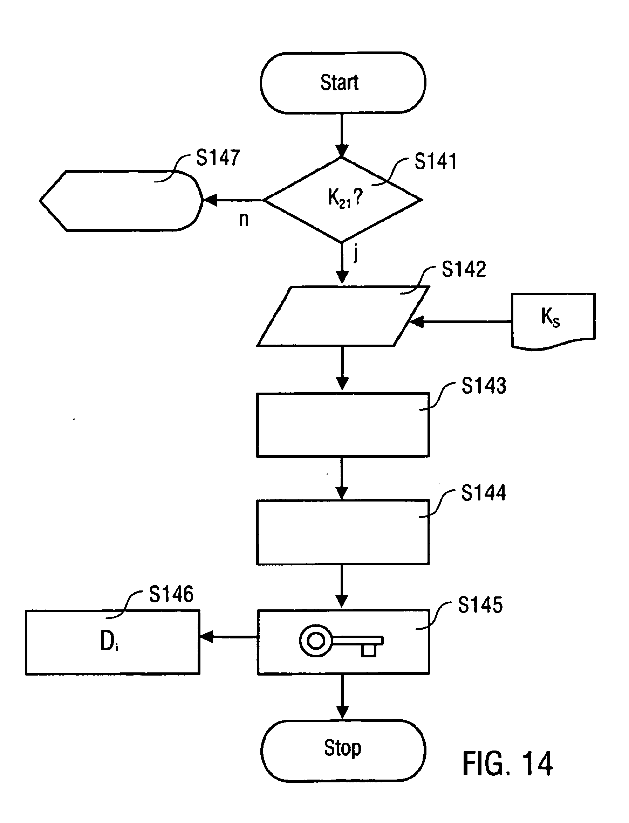

Figur 14 illustriert die Re-Identifizierung (De-Anonymisierung) der Probe bei der Verwendung des Master-Schlüssels. Zunächst wird geprüft, ob der Proben-Teilschlüssel K₂₁ an der Probenträgereinrichtung 100 vorhanden ist (Schritt S141). Anschließend wird der Proben-Teilschlüssel K₂₁ mit dem Quellen-Teilschlüssel K_{S} ergänzt (Schritt S142). Nach Auslesen des verschlüsselten kryptologischen Schlüssels K₁ aus der Datenspeichereinrichtung 20 (Schritt S143) wird dieser mit dem Master-Schlüssel aus Schritt S142 entschlüsselt, so dass der ursprüngliche kryptologische Schlüssel erhalten wird (Schritt S144). Mit diesem werden die Probendaten von der Datenspeichereinrichtung 20 entschlüsselt (Schritt S145) und als entschlüsselte Probendaten bereitgestellt (Schritt S146).

Wenn der Proben-Teilschlüssel K₂₁ von der Probenträgereinrichtung 100 entfernt wurde, liefert der Test in Schritt S141 ein Negativergebnis, so dass die De-Anonymisierung ausgeschlossen ist (S147).

Wenn der Master-Schlüssel einheitlich ausschließlich aus dem Quellen-Teilschlüssel besteht, kann auf die Bildung des Master-Schlüssels in Schritt S142 verzichtet werden. In diesem Fall wird der verschlüsselt abgelegte kryptologische Schlüssel am Ort des Quellen-Teilschlüssels, z. B. im Bereich der Erzeugung der Probe (siehe Figur 3) entschlüsselt.

Die oben beschriebenen Verfahren können sich auf die gesamten Probendaten oder einen Teil von diesen, insbesondere bestimmte Probendatentypen beziehen. Des Weiteren können die Verfahren mit mehreren kryptologischen Schlüsseln realisiert werden, die sich auf verschiedene, zu schützende Datenbereiche in der Datenspeichereinrichtung 20 beziehen.

Zusammenfassend können die Vorteile der Erfindung darin gesehen werden, dass die Ergänzung einer Probenträgereinrichtung um eine Schlüssel-basierte Authentifizierung, insbesondere mit Transpondern zahlreiche Anwendungen bei der Erzeugung und Handhabung von Proben, insbesondere biologischen Proben ermöglicht. Die Anonymisierung der Proben stellt an sich einen komplexen Vorgang dar, der erfindungsgemäß jedoch durch einen einzigen, einfachen Schritt, wie z. B. das Abbrechen eines Transponders von der Probenträgereinrichtung, realisiert werden kann. Durch die spätere Neu-Zuordnung des Transponders zu der Probenträgereinrichtung oder die Nutzung eines reversiblen Konzepts kann der Datenzugriff jedoch bei Bedarf wieder hergestellt werden.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Probenträgereinrichtung (100), insbesondere für biologische Proben, umfassend:
- eine Probenaufnahmeeinrichtung (10), die zur Aufnahme mindestens einer Probe eingerichtet ist,
- eine Datenspeichereinrichtung (20), die zur Speicherung von Probendaten eingerichtet ist, die sich auf die mindestens eine Probe beziehen, und
- eine Schlüsselspeichereinrichtung (30), die als separates Bauteil zusätzlich zur Datenspeichereinrichtung (20) vorgesehen ist, mit mindestens einem Schlüsselspeicher (31, 32, 33), wobei die Schlüsselspeichereinrichtung (30) zur Speicherung von Schlüsseldaten in dem mindestens einen Schlüsselspeicher (31, 32, 33) eingerichtet ist.

2. Probenträgereinrichtung gemäß Anspruch 1, die mindestens eines der folgenden Merkmale aufweist:
- mindestens ein Schlüsselspeicher (31, 32, 33) der Schlüsselspeichereinrichtung (30) ist von der Probenträgereinrichtung (100) trennbar,
- der mindestens eine Schlüsselspeicher (31, 32, 33) ist für eine elektronische, optische und/oder magnetische Speicherung der Schlüsseldaten eingerichtet,
- die Schlüsselspeichereinrichtung (30) ist zur drahtlosen Kommunikation mit einer Datenverarbeitungseinrichtung (200) eingerichtet,
- die Schlüsselspeichereinrichtung (30) umfasst mindestens einen Transponder (32), und
- jeder Schlüsselspeicher (31, 32, 33) der Schlüsselspeichereinrichtung (30) trägt eine spezifische, insbesondere optische Markierung (38.1).

3. Probenträgereinrichtung gemäß einem der vorhergehenden Ansprüche, bei der
- die Datenspeichereinrichtung (20) zur Speicherung von verschiedenen Datentypen eingerichtet ist, und
- die Schlüsselspeichereinrichtung (30) mehrere Schlüsselspeicher (31, 32, 33) umfasst, die zur Speicherung jeweils verschiedener Schlüsseldaten für jeweils einen der Datentypen eingerichtet sind.

4. Probenträgereinrichtung gemäß Anspruch 3, bei der
- die Datenspeichereinrichtung (20) mehrere Speicherbereiche umfasst, die zur Speicherung von jeweils einem der Datentypen eingerichtet sind, und
- jeder der Schlüsselspeicher (31, 32, 33) jeweils einem der Speicherbereiche (21) zugeordnet ist.

5. Datenverarbeitungseinrichtung (200), die zur Kopplung mit einer Probenträgereinrichtung (100) gemäß einem der vorhergehenden Ansprüche konfiguriert ist, umfassend:
- eine Schreib-Lese-Einrichtung (210) zum Schreiben und/oder Lesen der Schlüsseldaten in die und/oder von der Schlüsselspeichereinrichtung (30) der Probenträgereinrichtung (100), und
- einen kryptologischen Prozessor (220), der mit der Schreib-Lese-Einrichtung (210) verbunden und zur Entschlüsselung und/oder Verschlüsselung von Probendaten eingerichtet ist.

6. Datenverarbeitungseinrichtung gemäß Anspruch 5, die umfasst:
- eine Schlüssel-Datenbank (230), die zur Speicherung der Schlüsseldaten eingerichtet ist.

7. Verfahren zur Verarbeitung von Probendaten, wobei die Probenträgereinrichtung (100) gemäß einem der Ansprüche 1 bis 4 verwendet wird, mit den Schritten:
- Verschlüsselung der Probendaten mit mindestens einem kryptologischen Schlüssel, der in der Schlüsselspeichereinrichtung (30) gespeichert ist, und
- Speicherung der verschlüsselten Probendaten in der Datenspeichereinrichtung (20) der Probenträgereinrichtung (100).

8. Verfahren gemäß Anspruch 7, bei dem mindestens einer der folgenden Schritte ausgeführt wird:
- Verschlüsselung verschiedener Datentypen der Probendaten jeweils mit verschiedenen kryptologischen Schlüsseln und Speicherung der verschlüsselten verschiedenen Datentypen der Probendaten in der Datenspeichereinrichtung (20),
- Anonymisierung der gespeicherten verschlüsselten Probendaten, indem ein Schlüsselspeicher (31), in dem der kryptologische Schlüssel gespeichert ist, von der Probenträgereinrichtung (100) getrennt wird, und
- drahtlose Übertragung von mindestens einem von dem kryptologischen Schlüssel, dem Identifizierungs-Schlüssel und dem Master-Schlüssel von der Schlüsselspeichereinrichtung (30) zu einer Lese-Einrichtung (220), die zum Lesen der Schlüsseldaten vorgesehen ist.

9. Verfahren gemäß einem der Ansprüche 7 bis 8, mit den Schritten
- Speicherung des mindestens einen kryptologischen Schlüssels in der Schlüsselspeichereinrichtung (30) und zusätzlich in einer Schlüssel-Datenbank (230), und
- Speicherung von mindestens einem Identifizierungs-Schlüssel in der Schlüsselspeichereinrichtung (30), der den mindestens einen kryptologischen Schlüssel in der Schlüssel-Datenbank (230) identifiziert, wobei
- der mindestens eine kryptologische Schlüssel und der mindestens eine Identifizierungs-Schlüssel in verschiedenen Schlüsselspeichern (31, 32) der Schlüsselspeichereinrichtung (30) gespeichert sind.

10. Verfahren gemäß Anspruch 9, mit den Schritten
- Lesen des mindestens einen kryptologischen Schlüssels aus der Schlüsselspeichereinrichtung (30) oder aus der Schlüssel-Datenbank (230), und
- Entschlüsselung und Lesen der gespeicherten verschlüsselten Probendaten.

11. Verfahren gemäß einem der Ansprüche 7 bis 10, mit den Schritten
- Verschlüsselung des mindestens einen kryptologischen Schlüssels mit einem Master-Schlüssel, und
- Speicherung des mindestens einen verschlüsselten kryptologischen Schlüssels in der Datenspeichereinrichtung (20).

12. Verfahren gemäß Anspruch 11, bei dem mindestens einer der folgenden Schritte ausgeführt wird:
- Speicherung höchstens eines Teil des Master-Schlüssels in der Schlüsselspeichereinrichtung (30),
- Speicherung zumindest eines Teil des Master-Schlüssels in einem Quellenspeicher (310), der in einem Bereich (300) der Erzeugung der Probe vorgesehen ist, und
- Lesen des mindestens einen verschlüsselten kryptologischen Schlüssels aus der Datenspeichereinrichtung (20), Entschlüsselung des mindestens einen verschlüsselten kryptologischen Schlüssels mit dem Master-Schlüssel und Entschlüsselung und Lesen der gespeicherten verschlüsselten Probendaten.

13. Verfahren gemäß einem der Ansprüche 9 bis 12, mit dem Schritt
- Anonymisierung der gespeicherten verschlüsselten Probendaten, indem mindestens ein Schlüsselspeicher (32, 33), in dem mindestens einer von dem Identifizierungs-Schlüssel und dem Teil des Master-Schlüssels gespeichert ist, von der Probenträgereinrichtung (100) getrennt wird.

14. Verfahren zur Authentifizierung einer Probenträgereinrichtung (100) gemäß einem der Ansprüche 1 bis 4, mit den Schritten:
- Kopplung der Probenträgereinrichtung (100) mit einem Lese-Gerät einer Arbeitsstation in einem Bereich (500) zur Probenbearbeitung,
- Auslesen der Schlüsseldaten aus der Probenträgereinrichtung (100) mit dem Lese-Gerät, und
- Feststellung der Identität der Probenträgereinrichtung (100) und/oder der Arbeitsstation anhand der Schlüsseldaten.

15. Verfahren gemäß Anspruch 14, bei dem
- die Schlüsseldaten einen Signatur-Schlüssel umfassen, wobei eine Probenquelle in einem Bereich der Probenerzeugung die Probe mit einem nur der Probenquelle bekannten privaten Schlüssel signiert und die Signatur mit einem öffentlichen Schlüssel überprüft werden kann.

## Claims

1. Sample carrier device (100), in particular for biological samples, comprising:
- a sample receiving device (10), which is adapted for receiving at least one sample,
- a data storage device (20), which is adapted for storing sample data, which relate to the at least one sample, and
- a key storage device (30), which is provided as a separate component additionally to the data storage device (20), with at least one key storage (31, 32, 33), wherein the key storage device (30) is adapted for storage of key data in the at least one key storage (31, 32, 33).

2. The sample carrier device according to claim 1, having at least one of of the following features:
- at least one key storage (31, 32, 33) of the key storage device (30) is separable from the sample carrier device (100),
- the at least one key storage (31, 32, 33) is adapted for electronic, optical and/or magnetic storage of the key data,
- the key storage device (30) is adapted for wireless communication with a data processing device (200),
- the key storage device (30) comprises at least one transponder (32), and
- each key storage (31, 32, 33) of the key storage device (30) carries a specific, in particular optical mark (38.1).

3. The sample carrier device according to one of the preceding claims, wherein
- the data storage device (20) is adapted for storage of different data types, and
- the key storage device (30) comprises a plurality of key storages (31, 32, 33), which are adapted for storage of respectively different key data for respectively one of the data types.

4. The sample carrier device according to claim 3, wherein
- the data storage device (20) comprises a plurality of storage areas, which are adapted for storage of respectively one of the data types, and
- each of the key storages (31, 32, 33) is assigned to one of the storage areas (21), respectively.

5. A data processing device (200), which is adapted for coupling with a sample carrier device (100) according to one of the preceding claims, comprising:
- a read-write device (210) for writing and/or reading the key data into and/or out of the key storage device (30) of the sample carrier device (100), and
- a cryptologic processor (220), which is connected to the read-write device (210) and is adapted for decryption and/or encryption of sample data.

6. The data processing device according to claim 5, which comprises:
- a key database (230), which is adapted for storage of the key data.

7. A method for the processing of sample data, wherein the sample carrier device (100) according to one of the claims 1 to 4 is used, with the steps:
- encryption of the sample data with at least one cryptologic key, which is stored in the key storage device (30), and
- storage of the encrypted sample data in the data storage device (20) of the sample carrier device (100).

8. The method according to claim 7, wherein at least one of the following steps is conducted:
- encryption of different data types of the sample data with, respectively, different cryptologic keys, and storage of the encrypted, different data types of the sample data in the data storage device (20),
- anonymization of the stored encrypted sample data saved by separating a key storage (31), in which the cryptologic key is saved, from the sample carrier device (100), and
- wireless transmission of at least one of the cryptologic key, the identification key and the master key from the key storage device (30) to a reading device (220), which is provided for reading the key data.

9. The method according to one of claims 7 to 8, with the steps:
- storage of the at least one cryptologic key in the key storage device (30) and additionally in a key database (230), and
- storage of at least one identification key in the key storage device (30), which identifies the at least one cryptologic key in the key database (230), wherein
- the at least one cryptologic key and the at least one identification key are stored in different key storages (31, 32) of the key storage device (30).

10. The method according to claim 9, with the steps:
- reading of the at least one cryptologic key from the key storage device (30) or from the key database (230), and
- decryption and reading of the encrypted sample data stored.

11. The method according to one of claims 7 to 10, with the steps:
- encryption of the at least one cryptologic key with a master key, and
- storage of the at least one encrypted cryptologic key in the data storage device (20).

12. The method according to claim 11, wherein at least one of the following steps is conducted:
- storage of at most one part of the master key in the key storage device (30),
- storage of at least one part of the master key in a source storage (310), which is provided for in a region (300) of the generation of the sample, and
- reading of the at least one encrypted cryptologic key from the data storage device (20), decryption of the at least one encrypted cryptologic key with the master key, and decryption and reading of the encrypted sample data stored.

13. The method according to one of claims 9 to 12, with the step:
- anonymization of the stored encrypted sample data by separating at least one key storage (32, 33), in which at least one of the identification key and the part of the master key is stored, from the sample carrier device (100).

14. A method for authentication of a sample carrier device (100) according to one of claims 1 to 4, with the steps:
- coupling the sample carrier device (100) with a reading apparatus of a workstation in a region (500) for sample processing,
- read-out of the key data from the sample carrier device (100) with the reading apparatus, and
- establishing the identity of the sample carrier device (100) and/or the workstation using the key data.

15. The method according to claim 14, wherein
- the key data comprise a signature key, wherein a sample source signs the sample in a region of sample generation with a private key that is known only to the sample source and the signature can be verified with a public key.

## Revendications

1. Dispositif porte-échantillon (100), en particulier pour des échantillons biologiques, comportant :
- un dispositif de réception d'échantillon (10) qui est conçu pour la réception d'au moins un échantillon,
- un dispositif de stockage de données (20) qui est conçu pour le stockage de données d'échantillon qui se rapportent à l'au moins un échantillon, et
- un dispositif de stockage de clé (30) qui est prévu, en tant qu'élément séparé, en plus du dispositif de stockage de données (20), avec au moins une unité de stockage de clé (31, 32, 33), le dispositif de stockage de clé (30) étant conçu pour le stockage de données de clé dans l'au moins une unité de stockage de clé (31, 32, 33).

2. Dispositif porte-échantillon selon la revendication 1, qui comprend au moins une des caractéristiques suivantes :
- au moins une unité de stockage de clé (31, 32, 33) du dispositif de stockage de clé (30) peut être séparée du dispositif porte-échantillon (100),
- l'au moins une unité de stockage de clé (31, 32, 33) est conçue pour un stockage électronique, optique et/ou magnétique des données de clé,
- le dispositif de stockage de clé (30) est conçu pour la communication sans fil avec un dispositif de traitement de données (200),
- le dispositif de stockage de clé (30) comporte au moins un transpondeur (32), et
- chaque unité de stockage de clé (31, 32, 33) du dispositif de stockage de clé (30) porte un marquage spécifique, en particulier optique (38.1).

3. Dispositif porte-échantillon selon l'une quelconque des revendications précédentes, dans lequel
- le dispositif de stockage de données (20) est conçu pour le stockage de différents types de données, et
- le dispositif de stockage de clé (30) comporte plusieurs unités de stockage de clé (31, 32, 33) qui sont conçues pour le stockage respectivement de différentes données de clé pour respectivement un des types de données.

4. Dispositif porte-échantillon selon la revendication 3, dans lequel
- le dispositif de stockage de données (20) comporte plusieurs secteurs de stockage qui sont conçus pour le stockage de respectivement un des types de données, et
- chacune des unités de stockage de clé (31, 32, 33) est associée respectivement à un des secteurs de stockage (21).

5. Dispositif de traitement de données (200) qui est configuré pour le couplage avec un dispositif porte-échantillon (100) selon l'une quelconque des revendications précédentes, comportant :
- un dispositif de lecture-écriture (210) pour l'écriture et/ou la lecture des données de clé dans le dispositif de stockage de clé (30) du dispositif porte-échantillon (100), et
- un processeur cryptologique (220) qui est relié au dispositif de lecture-écriture (210) et est conçu pour le déchiffrement et/ou le chiffrement de données d'échantillon.

6. Dispositif de traitement de données selon la revendication 5, qui comporte :
- une banque de données de clé (230) qui est conçue pour le stockage des données de clé.

7. Procédé de traitement de données d'échantillon, dans lequel est employé le dispositif porte-échantillon (100) selon une des revendications 1 à 4, avec les étapes de :
- chiffrement des données d'échantillon avec au moins une clé cryptologique qui est stockée dans le dispositif de stockage de clé (30), et
- stockage des données d'échantillon chiffrées dans le dispositif de stockage de données (20) du dispositif porte-échantillon (100).

8. Procédé selon la revendication 7, dans le cadre duquel est exécutée au moins une des étapes suivantes :
- chiffrement de différents types de données des données d'échantillon respectivement avec différentes clés cryptologiques et stockage des différents types de données chiffrés des données d'échantillon dans le dispositif de stockage de données (20),
- anonymisation des données d'échantillon chiffrées stockées par le fait qu'une unité de stockage de clé (31), dans laquelle est stockée la clé cryptologique, est séparée du dispositif porte-échantillon (100), et
- transmission sans fil de la clé cryptologique et/ou de la clé d'identification et/ou de la clé-maître du dispositif de stockage de clé (30) à un dispositif de lecture (220) qui est prévu pour la lecture des données de clé.

9. Procédé selon l'une des revendications 7 à 8, avec les étapes de :
- stockage de l'au moins une clé cryptologique dans le dispositif de stockage de clé (30) et en plus dans une banque de données de clé (230), et
- stockage d'au moins une clé d'identification dans le dispositif de stockage de clé (30), laquelle clé identifie l'au moins une clé cryptologique dans la banque de données de clé (230),
- l'au moins une clé cryptologique et l'au moins une clé d'identification étant stockées dans différentes unités de stockage de clé (31, 32) du dispositif de stockage de clé (30).

10. Procédé selon la revendication 9, avec les étapes de :
- lecture de l'au moins une clé cryptologique dans le dispositif de stockage de clé (30) ou dans la banque de données de clé (230), et
- déchiffrement et lecture des données d'échantillon chiffrées stockées.

11. Procédé selon l'une des revendications 7 à 10, avec les étapes de :
- chiffrement de l'au moins une clé cryptologique avec une clé-maître, et
- stockage de l'au moins une clé cryptologique chiffrée dans le dispositif de stockage de données (20).

12. Procédé selon la revendication 11, dans le cadre duquel est exécutée au moins une des étapes suivantes :
- stockage au maximum d'une partie de la clé-maître dans le dispositif de stockage de clé (30),
- stockage au moins d'une partie de la clé-maître dans une unité de stockage-source (310) qui est prévue dans un secteur (300) de la production de l'échantillon, et
- lecture de l'au moins une clé cryptologique chiffrée dans le dispositif de stockage de données (20), déchiffrement de l'au moins une clé cryptologique chiffrée avec la clé-maître et déchiffrement et lecture des données d'échantillon chiffrées stockées.

13. Procédé selon l'une des revendications 9 à 12, avec les étapes de :
- anonymisation des données d'échantillon chiffrées stockées par le fait qu'au moins une unité de stockage de clé (32, 33), dans laquelle est stockée la clé d'identification et/ou la partie de la clé-maître, est séparée du dispositif porte-échantillon (100).

14. Procédé d'authentification d'un dispositif porte-échantillon (100) selon l'une des revendications 1 à 4, avec les étapes de :
- couplage du dispositif porte-échantillon (100) à un appareil de lecture d'un poste de travail dans un secteur (500) pour le traitement d'échantillon,
- lecture des données de clé dans le dispositif porte-échantillon (100) avec l'appareil de lecture, et
- détermination de l'identité du dispositif porte-échantillon (100) et/ou du poste de travail à l'aide des données de clé.

15. Procédé selon la revendication 14, dans lequel
- les données de clé comportent une clé de signature, une source d'échantillons dans un secteur de la production d'échantillon signant l'échantillon avec une clé privée connue uniquement de la source d'échantillons et la signature pouvant être vérifiée avec une clé publique.
